# EUROPEAN PATENT SPECIFICATION

(11) **EP 2 587 376 B1**
(45) Date of publication and mention of the grant of the patent: **04.09.2019**
(21) Application number: 12187977.9
(22) Date of filing: 10.10.2012
(51) Int. Cl.: G06F 9/52

(54) **Systems and methods for semaphore-based protection of shared system resources**
Systeme und Verfahren für flügelsignalbasierten Schutz von gemeinsam genutzten Systemressourcen
Systèmes et procédés pour protection à base de sémaphore de ressources d'un système partagé

(30) Priority: 27.10.2011 US 201113283187
(43) Date of publication of application: 01.05.2013
(73) Proprietor: NXP USA, Inc., Austin TX 78735 (US)
(72) Inventor: Circello, Joseph, Phoenix, AZ 85023-5230 (US); Scobie, James Andrew Collier, Helensburgh, Argyll & Bute G84 7SQ (GB)
(74) Representative: Bradler, Carola Romana

(56) References cited:
- US-A1- 2003 115 476
- US-A1- 2006 225 078
- US-A1- 2007 094 430
- US-A1- 2007 150 899
- US-B1- 7 353 515
- US-B2- 7 007 108

## Description

### TECHNICAL FIELD

Embodiments of the inventive subject matter relate to methods and apparatus for controlling access to shared system resources.

### BACKGROUND

In current electronic systems, semaphores have been used to provide a mechanism for controlling concurrent accesses to shared memory regions. When used properly, semaphores help to ensure that shared memory regions are accessed serially, rather than concurrently, so that the shared memory regions may remain coherent. For example, in a multiple-processor system, before a processor accesses (e.g., updates or writes to) a shared memory region, the processor may be required, by software convention, to determine whether a semaphore associated with the shared memory region currently is locked by another processor. If not, the processor may lock the semaphore and access the shared memory region, and other processors should avoid concurrent accesses to the shared memory region. Only the processor that locked the semaphore may access the shared memory region and then unlock it after the access has been completed. Once the semaphore has been unlocked, another processor may attempt to lock the semaphore in order to reserve access to the shared memory region. For example, US 2003/115476 A1 discloses a system in which one of a pool of protection keys can be assigned to each memory region protected by a semaphore. A process or thread obtains access to memory by calling a semaphore routine, and the semaphore routine calls a kernel routine to insert a protection key into a protection key register for the process or thread. The process or thread also may relinquish access to the memory region by calling a semaphore routine, and the semaphore routine calls a kernel routine to remove the protection key from the protection key register for the process or thread.

Proper system operation is guaranteed only when the processors use the semaphores in the correct manner. More specifically, each of the processors must follow the implied protocol associated with locking and unlocking semaphores in conjunction with making accesses to shared memory regions. Failure to follow the required protocols, either because of a programming error or malicious software, may manifest itself in any of a number of error conditions (e.g., data corruption, system hangs, system crashes, and so on). In the processor industry, requirements with respect to system fault tolerance continue to increase.

### BRIEF DESCRIPTION OF THE DRAWINGS

FIG. 1 is a simplified block diagram of an electronic system, in accordance with an example embodiment;
FIG. 2 is a simplified block diagram of a semaphores module, in accordance with an example embodiment;
FIG. 3 is a semaphore state machine, in accordance with an example embodiment;
FIG. 4 is a flowchart of a method for transitioning through semaphore states, in accordance with an example embodiment;
FIG. 5 is an example format of a region descriptor, in accordance with an example embodiment;
FIG. 6 is a simplified block diagram of a memory protection unit, in accordance with an example embodiment;
FIG. 7 is a simplified block diagram of effective access permissions generation logic, in accordance with an example embodiment;
FIG. 8 is a flowchart of a method for granting or denying an access request to a shared system resource that is enforced by a semaphore and protected by a memory protection unit, in accordance with an example embodiment; and
FIG. 9 is a flowchart of a method for fabricating an electronic system that includes a semaphore affected memory protection unit, in accordance with an example embodiment.

### DETAILED DESCRIPTION

Embodiments relate only to claimed combinations of features. In the following, when the term "embodiment" relates to unclaimed combinations of features, said term has to be understood as referring to examples of the present invention.

Embodiments described herein include methods and apparatus for enforcing semaphore access control of shared system resources. The various embodiments may better ensure coherent memory accesses in multiple-processor systems, even with the ever-present risk of erroneous or malicious software that may attempt to access shared memory in a non-coherent manner. As will be described in more detail below, semaphores may be explicitly associated, in software, with region descriptors for shared system resources. Essentially, each region descriptor specifies a range of one or more addresses that defines a shared system resource, and default access permissions for various system components (e.g., processors or other components) with respect to the shared system resource. When a system component issues a request to access an address that falls within the range of addresses that define a shared system resource, a memory protection unit determines whether the system component has the appropriate permissions to perform the access. If so, the memory protection unit may grant the access request. If not, the memory protection unit may deny the access request.

According to an embodiment, the memory protection unit receives signals from a semaphores module, which indicate whether or not a system component has locked a semaphore associated with a shared system resource. Based on the semaphore signals, the memory protection unit potentially may modify the default access permissions codified in the corresponding region descriptor, in order to ensure that only a system component that has properly locked a semaphore may be granted an access request to the shared system resource.

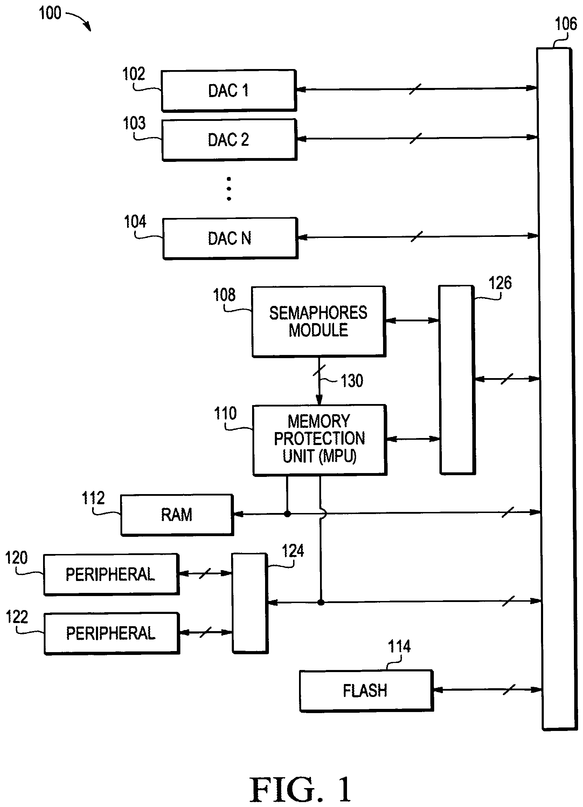

The various embodiments may be implemented in any of a number of system architectures, and FIG. 1 illustrates a simplified block diagram of an electronic system 100, in accordance with a particular example embodiment. System 100 includes multiple data access components 102, 103, 104 (DAC) (also referred to herein as "masters"), a system bus 106, a semaphores module 108, a memory protection unit 110 (MPU), one or more random access memories 112 (RAM) (e.g., static RAM (SRAM)), read-only flash array 114, one or more peripheral modules 120, 122, and one or more peripheral busses 124, 126.

Communication between DACs 102-104, semaphores module 108, MPU 110, RAM 112, flash array 114, and peripheral modules 120, 122 is implemented via the system bus 106 and peripheral busses 124, 126, according to an embodiment. DACs 102-104 may function as bus masters (e.g., DACs 102-104 are connected to system bus 106 via master ports), and RAM 112, flash array 114, and peripheral modules 120, 122 may function as slaves (e.g., RAM 112, flash array 114, and peripheral bus 124 are connected to system bus 106 via slave ports), for example. As bus masters, DACs 102-104 may attempt to access memory locations (e.g., RAM 112 and flash array 114) via the system bus 106. Similarly, DACs 102-104 may access peripheral modules 120, 122, semaphores module 108, and MPU 110 via system bus 106 and peripheral busses 124, 126. Each DAC 102-104 has a unique bus master number, which the DAC 102-104 may provide on the system bus 106 (along with an access address) when the DAC 102-104 makes an access attempt to a memory location or other module. In other embodiments, the communication bus structure may be different from that depicted in FIG. 1.

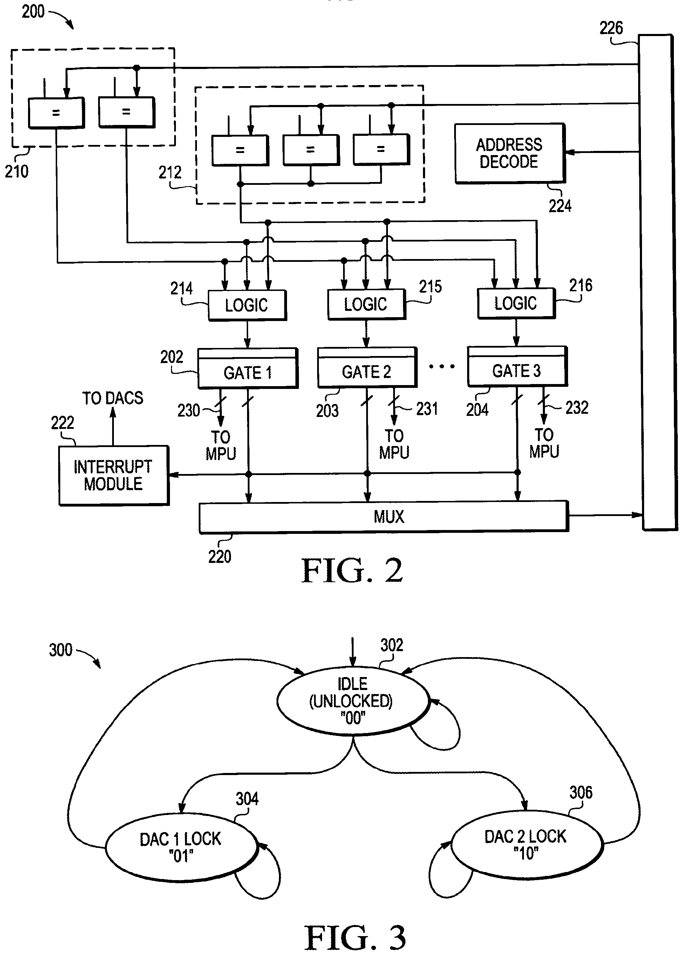

Although the term "bus" is used herein, it is to be understood that a "bus" essentially is a type of interconnect between system entities, which facilitates communication of data, control signals, or other signals between the system entities. Accordingly, the use of the term "bus" herein is not meant to be limiting, but should be interpreted broadly as any of a variety of types of interconnects that are sufficient to provide for communication between system entities. For example, system bus 106 (or "interconnect") and peripheral busses 124, 126 (or "interconnects") may be, for example, 32-bit wide busses, although system bus 106 and/or peripheral busses 124, 126 alternatively may be wider or narrower, as well. Each of busses 106, 124, 126 may implement a bus controller (not illustrated) in order to perform bus protocol conversions, bus width conversions, operating frequency conversions, or other signal alterations, although this is not required. In addition, each of busses 106, 124, 126 includes address lines, data lines, and various control lines (e.g., a read/write control signal line, a bus clock line, a transfer size signal line, and/or a wait signal line). Conversely, peripheral busses 124, 126 provide bus protocols that enable the DACs 102-104 (e.g., processor cores) to access various peripheral registers (e.g., registers of peripherals 120, 122) and programming model registers (e.g., registers 202-204, FIG. 2 and 602, 604, FIG. 6) of the semaphores module 108 and MPU 110, as will be described in more detail later.

As used herein, the terms "data access component" and "DAC" mean a programmable hardware module that is adapted to execute software instructions that initiate data transfers with shared system resources. A "shared system resource" includes any memory location(s), register(s), and peripheral(s) that are capable of being accessed by multiple DACs 102-104 (e.g., ranges of addressable locations and/or single addressable locations within RAM 112, flash array 114, and peripherals 120, 122).

DACs 102-104 may include any combination of hardware modules selected from a group that includes processor cores (e.g., microcontrollers, microprocessors, and/or digital signal processors (DSPs)), non-core processing elements, Direct Memory Access (DMA) units, and/or other hardware modules that are programmable and adapted to execute software instructions that initiate data transfers between a DAC 102-104 and a shared system resource. As indicated in FIG. 1, system 100 may include any number, *N,* of DACs 102-104, where *N* is an integer that is greater than or equal to two. For example, in an embodiment, DACs 102-104 include multiple processor cores (i.e., system 100 is a "multi-core" system), and such an embodiment is discussed in more detail below. However, although the figures and description herein may discuss embodiments of a multi-core system, it is to be understood that the scope of the inventive subject matter includes electronic systems that include only a single processor core, no processor cores, and/or various combinations of other types of processing elements. Further, although electronic system 100 is illustrated as having three DACs 102-104, an electronic system may include more or fewer than three DACs, in other embodiments.

DACs 102-104 are adapted to execute software instructions (e.g., machine-readable code) which, among other things, may require access to shared system resources. In order to access a shared system resource, a DAC 102-104 issues an access request over system bus 106. The access request specifies the access type (e.g., read, write, or execute), and at least one address corresponding to the shared system resource.

Prior to issuing an access request, each DAC 102-104 attempts to lock (or "obtain ownership of') a semaphore associated with the shared system resource. According to an embodiment, semaphores module 108 is configured to implement a plurality of such semaphores, and DACs 102-104 interact with the semaphores module 108 in order to lock and unlock the semaphores. The state of each semaphore (e.g., unlocked or locked by a particular DAC 102-104) is maintained in a semaphore "gate" (or semaphore register) (e.g., semaphore gates 202-204, FIG. 2). The state reflects which DAC 102-104, if any, currently has a lock on the semaphore.

To attempt to lock a semaphore, a "lock-requesting" DAC 102-104 may attempt to write a value (e.g., an encoded value representing an identity of the lock-requesting DAC) into a particular semaphore register via system bus 106 and peripheral bus 126. The semaphores module 108 will allow the value to be written to the semaphore register only when the semaphore is in an idle state. Otherwise (e.g., when another DAC 102-104 already has locked the semaphore), the semaphores module 108 will not update the semaphores register with the value that the lock-requesting DAC 102-104 attempted to write. To determine whether the lock-requesting DAC 102-104 successfully locked the semaphore, the lock-requesting DAC 102-104 reads (via system bus 106 and peripheral bus 126) a value from the same semaphore register that it attempted to write. When the read value is the same as the value that the lock-requesting DAC 102-104 attempted to write to the semaphore register, the lock-requesting DAC 102-104 has successfully locked the semaphore. When the read value is different from the value that the lock-requesting DAC 102-104 attempted to write to the semaphore register, the lock-requesting DAC 102-104 may assume that it was unable to lock the semaphore (e.g., another DAC 102-104 already has locked the semaphore).

When a DAC 102-104 has properly locked a semaphore associated with a shared system resource, the DAC 102-104 may issue access requests of various access types (e.g., read, write, and/or execute) over system bus 106, in an attempt to access the shared system resource. To issue an access request, for example, a DAC 102-104 provides an address on the address lines of system bus 106, which identifies a location within the shared system resource (e.g., RAM 112, flash array 114, or a peripheral 120, 122). For a write-type of access request, the DAC 102-104 also provides a data value on data lines of system bus 106. For a read-type of data access request, the DAC 102-104 may attempt to read a data value from the data lines of system bus 106, when such a data value is provided. In addition to providing an address on the system bus 106, the DAC 102-104 also provides its unique bus master number on the system bus 106.

MPU 110 is configured to protect designated regions of shared system resources by evaluating access requests from DACs 102-104 that fall within those designated regions. For example, in the embodiment illustrated in FIG. 1, some or all of RAM 112 and peripherals 120, 122 are considered shared system resources that are protected by MPU 110, and accordingly MPU 110 may control access to those resources. In contrast, in the illustrated embodiment, read-only flash array 114 is not protected by MPU 110, although it may be in another embodiment. MPU 110 may protect any of a variety of types of shared system resources, and the particular configuration illustrated in FIG. 1 is for example purposes only. Although the terms "memory protection unit" and MPU are used herein, it is to be understood that the MPU 110 also may protect peripheral accesses and/or accesses to other system resources that may not strictly be considered as "memory." Accordingly, MPU 110 may be more broadly considered as a "shared resource protection unit."

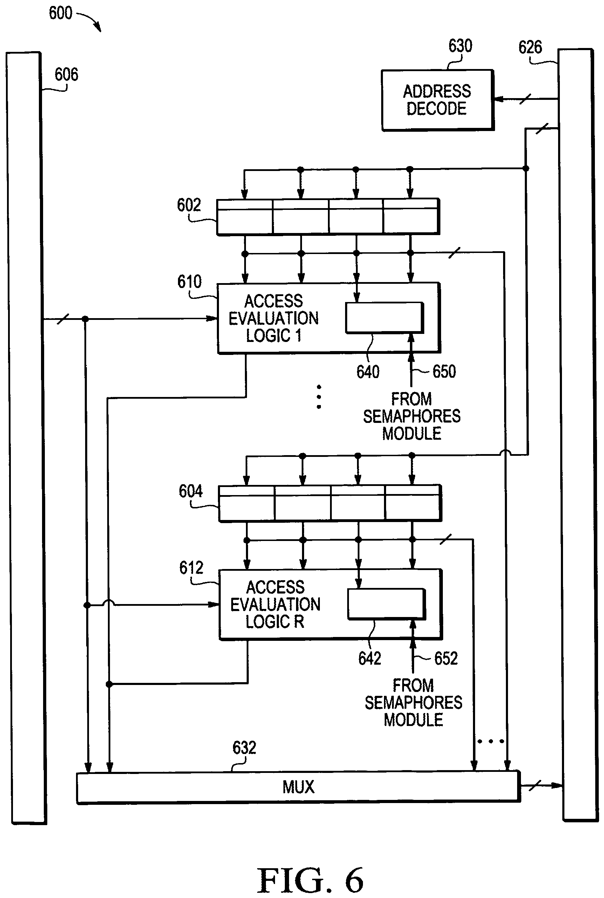

As will be described in more detail below, when a DAC 102-104 issues an access request in an attempt to access a shared system resource that is protected by MPU 110, MPU 110 determines whether the requested access should be allowed or denied based on access permissions codified in a "region descriptor" corresponding to the shared system resource, along with knowledge of the state of any semaphore that may be associated with the shared system resource. The region descriptors are stored in region descriptor registers (e.g., registers 602, 604, FIG. 6) of the MPU 110. As will be described in more detail later, at various times (e.g., during system initialization or reset, normal operation, and other times), one or more of DACs 102-104 may write region descriptors into the region descriptor registers via system bus 106 and peripheral bus 126. As will also be described in more detail later, each region descriptor may include a starting address for a region, an ending address for the region, default access permissions for each of the DACs 102-104, an identifier of a semaphore that is associated with the region, and other information.

In an embodiment, the MPU 110 potentially alters the default access permissions codified in a region descriptor based on the semaphore signals. More particularly, the MPU 110 obtains knowledge of the state of a semaphore that is associated with a particular region descriptor (e.g., the semaphore identified in the region descriptor) through semaphore signals that are provided on hardware connections 130 between the semaphores module 108 and the MPU 110. As will be described in more detail below, the MPU 110 includes circuitry that potentially alters default access permissions stored in region descriptor registers (e.g., registers 602, 604, FIG. 6) based on the semaphore signals. More particularly, the MPU 110 may dynamically change the default access permissions for a given region of a shared resource based on the state of a semaphore associated with that region. The access permission changes, based on the state of the semaphore, are implemented completely in hardware, in an embodiment. Thus, in the context of evaluating an access request, there is no need for any system component to request a semaphore status via software, or for any system component to report a semaphore status via software. By configuring the MPU 110 to potentially alter the access permissions codified in a region descriptor based on the semaphore signals, the system 100 implements hardware enforcement of the semaphores. Accordingly, the potential for erroneous or malicious code to non-coherently alter a shared system resource may be reduced significantly.

The hardware connections 130 are distinct from the system bus 106 and the peripheral busses 124, 126, and are configured to convey the states of the various semaphores (e.g., the contents of the semaphore registers) on a real-time basis. More particularly, the states of each of the semaphores managed by semaphores module 108 are output, via connections 130, to MPU 110. As will be described in more detail later, an access evaluation circuit (e.g., access evaluation logic 610, 612, FIG. 6) within MPU 110 selects, as needed, signals carried on connections 130 that correspond to particular semaphores.

As mentioned previously, peripheral modules 120, 122 may be considered to be shared system resources with access protections provided by MPU 110. More particularly, in an embodiment, one or more peripheral modules 120, 122 are operatively connected to peripheral bus 124, which provides a bus protocol that enables DACs 102-104 to access the programming models and/or various registers of peripherals modules 120, 122. Peripheral modules 120, 122 may include, for example, any one or more peripherals selected from a group that includes, but is not limited to, cyclic-redundancy-check (CRC) calculation modules, checksum calculation modules, serial peripheral interfaces (SPIs), universal asynchronous receiver/transmitters (UARTs), counters, timers, memory controllers, display controllers (e.g., liquid crystal display (LCD) controllers), user interface controllers (e.g., keypad, touchscreen, and/or pointer controllers), interrupt controllers, and power-on reset generators to name a few. Electronic system 100 may include various other peripherals, as well.

It is to be understood that the system 100 of FIG. 1 is provided for example purposes only, and that the various embodiments may be implemented in systems that include more, fewer, and different components than those depicted in FIG. 1. For example, electronic system 100 also may include read only memory (ROM), one or more timing sources, external interfaces, general purpose input/output (GPIO) ports, analog interfaces, additional or different busses, voltage regulators, and/or power management circuits, among other things. In an embodiment, system 100 represents a system-on-a-chip that includes the DACs 102-104, the system bus 106, the semaphores module 108, the MPU 110, the RAM 112, flash array 114, peripheral modules 120, 122, and peripheral busses 124, 126. However, the various embodiments alternatively may be used in a system-in-package, in which any or all of the DACs 102-104, the system bus 106, the semaphores module 108, the MPU 110, the RAM 112, flash array 114, peripheral modules 120, 122, and peripheral busses 124, 126 are implemented on discrete chips that are encapsulated in a single package. In still other embodiments, any or all of the DACs 102-104, the system bus 106, the semaphores module 108, the MPU 110, the RAM 112, flash array 114, peripheral modules 120, 122, and peripheral busses 124, 126 may be implemented as separately packaged components.

FIG. 2 is a simplified block diagram of a semaphores module 200 (e.g., semaphores module 108, FIG. 1), in accordance with an example embodiment. Semaphores module 200 is a slave peripheral device, which implements a plurality, *M*, of semaphores in the form of hardware-enforced gates or semaphore registers 202, 203, 204. For example, in a particular embodiment, semaphores module 200 may implement 16 semaphores, and correspondingly includes 16 semaphore registers 202-204. Alternatively, a semaphores module 200 may implement more or fewer semaphores. Either way, each semaphore may be dedicated to a different region of shared system resources. The regions may be distinct from each other or, in a less typical scenario, some of the regions may overlap. As will be explained in more detail below, the assignment of each semaphore to a region is configurable, in software. More particularly, each region descriptor of a shared system resource may include an identification of the semaphore (e.g., the semaphore register 202-204) assigned to the region covered by the region descriptor.

Semaphore registers 202-204 each function as a finite state machine, and the value stored within a semaphore register 202-204 at any given time reflects the current state of the semaphore. More particularly, the value stored within a semaphore register 202-204 reflects which DAC, if any, currently has a lock on the semaphore. In a particular embodiment, each semaphore register 202-204 implements a 2-bit, 3-state machine designed to allow either of two DACs (e.g., either of two CPUs) to lock any given semaphore. In other embodiments, each semaphore register 202-204 may implement a y-bit, *z*-state machine, where *y* is greater than 2, and z is greater than 3. In such embodiments, a semaphore state machine may be designed to allow any one of more than two DACs to lock a semaphore (e.g., any one of the *N* DACs 102-104, FIG. 1).

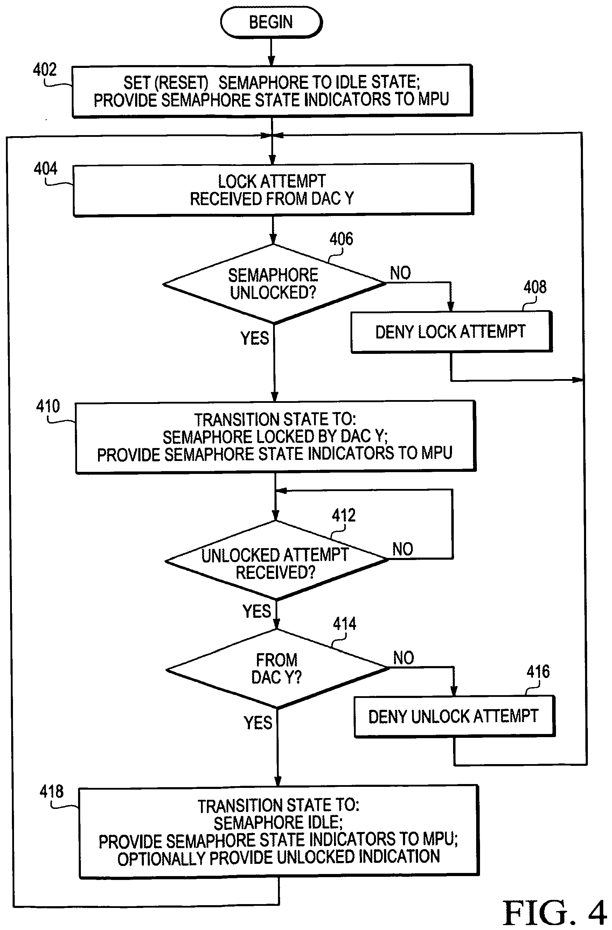

The semaphores module 200 is a memory-mapped module, which includes an interface to peripheral bus 226 (e.g., peripheral bus 126, FIG. 1) and at least one interrupt output, in an embodiment. As will be explained in more detail in conjunction with FIGs 3 and 4, below, a DAC (e.g., one of DACs 102-104, FIG. 1) may attempt to lock or unlock a semaphore by performing a write operation to the semaphores module 200, with the write address including an offset that identifies a particular one of the semaphore registers 202-204. The DAC conveys the write address (or address offset) and data to the semaphores module 200 via system bus (e.g., system bus 106, FIG. 1) and peripheral bus 226 (e.g., peripheral bus 126, FIG. 1). A DAC may attempt to verify whether or not the DAC was successful at setting the state of a semaphore (e.g., locking or unlocking the semaphore) by reading back a value from the semaphore register 202-204 that the DAC had previously attempted to write. When the DAC successfully reads back the same value that it attempted to write to the semaphore register 202-204, the DAC may assume that it successfully set the semaphore state. Prior to discussing other components of semaphores module 200, the semaphore state machine and methods for its operation will be described in conjunction with FIGs 3 and 4.

FIG. 3 is a semaphore state machine 300, in accordance with an example embodiment. The state machine 300 of FIG. 3 pertains to an example system in which two DACs may vie for ownership of a particular semaphore. As discussed previously, more than two DACs may have access to semaphores and shared system resources, in other embodiments. One of skill in the art would understand how to modify the state machine 300 and corresponding method of FIG. 4 for transitioning through semaphore states to apply to a system in which more than two DACs have access to semaphores and shared system resources. However, for the purposes of ease of description and understanding, the state machine 300 and method of FIG. 4 are directed toward a system with only two DACs vying for shared system resources. The example embodiment should not be interpreted as limiting.

As discussed above, according to an embodiment, each semaphore register (e.g., each of registers 202-204, FIG. 2) implements a 2-bit, 3-state machine designed to allow either of two DACs (e.g., either of two CPUs) to lock any given semaphore. One of the states (i.e., corresponding to one of the values represented by the 2-bits) is an "idle" or "unlocked" state. The other states (i.e., corresponding to other values represented by the 2-bits) indicate which one of the two DACs has the semaphore locked at a given time.

Upon system startup or reset, state machine 300 is in an "idle" or "unlocked" state 302. For example, state machine 300 may be in the idle state 302 when a value of "00" is stored in the corresponding semaphore register (e.g., register 202, FIG. 2). The state machine 300 remains in the idle state unless a write of an appropriate lock value is made from one of the DACS that may potentially lock the semaphore. For example, DAC 1 (e.g., DAC 1 102, FIG. 1) may attempt to write a DAC 1 lock value (e.g., "01") into the semaphore register, which initiates a transition from the idle state 302 to the "DAC 1 LOCK" state 304. Alternatively, when in the idle state 302, DAC 2 (e.g., DAC 2 103, FIG. 1) may attempt to write a DAC 2 lock value (e.g., "10") into the semaphore register, which initiates a transition from the idle state 302 to the "DAC 2 LOCK" state 306.

The state machine 300 remains in the DAC 1 LOCK state 304 or the DAC 2 LOCK state 306 until DAC 1 or DAC 2, respectively, attempts to write an unlock value (e.g., "00") into the semaphore register. While in the DAC 1 LOCK state 304 or the DAC 2 LOCK state 306 (i.e., when DAC 1 or DAC 2 has the semaphore locked), the semaphores module 200 (FIG. 2) will refuse to overwrite the semaphore register with any value provided by any DAC that does not have the semaphore locked. For example, while in the DAC 1 LOCK state 304, the semaphores module 200 will refuse to overwrite the semaphore register with any value provided by DAC 2. Similarly, while in the DAC 2 LOCK state 306, the semaphores module 200 will refuse to overwrite the semaphore register with any value provided by DAC 1. When the DAC that has the semaphore locked writes an unlock value (e.g., "00") into the semaphore register, the state machine 300 transitions from either the DAC 1 LOCK state 304 or the DAC 2 LOCK state 306 to the idle state 302.

The above description pertains to an embodiment in which either of two DACs may lock a semaphore, and those of skill in the art would understand, based on the description herein, how to modify the above-described embodiment to apply to a system in which more than two DACs may lock a semaphore. In yet other embodiments, the semaphores module 200 may implement a failed lock write notification to a DAC 102-104 when the DAC 102-104 attempted to write to a semaphore that was already locked by another DAC 102-104. In such an embodiment, each semaphore register 202-204 may implement a *y* -bit, z -state machine designed to record failed lock attempts and transitions based on gate locking and unlocking.

FIG. 4 is a flowchart of a method for transitioning a semaphore through semaphore states (e.g., states 302, 304, 306, FIG. 3), in accordance with an example embodiment. The method begins in block 302, in which, in conjunction with system startup or reset, the semaphore is set (or reset) into the idle (or unlocked) state (e.g., state 302, FIG. 3). For example, as mentioned previously, this may be achieved by storing an idle value (e.g., "00") associated with the idle state in the semaphore register corresponding to the semaphore. While in the idle state, the semaphores module (e.g., semaphores module 108, FIG. 1) provides semaphore state indicators (also referred to herein as "semaphore signals") to the MPU (e.g., MPU 110, FIG. 1) over hardware connections (e.g., hardware connections 130, 230-232, 650, 652, 750, FIGs 1, 2, 6, 7). The semaphore state indicators indicate that the semaphore is in the idle state. According to an embodiment, the semaphore state indicators correspond to the actual value in the semaphore register, although they may correspond to encoded, decoded or alternate values, as well.

The semaphore remains in the idle state until a lock attempt is received from a DAC ("DAC *y*")*,* in block 404. For example, a lock attempt may involve DAC *y* attempting to write a lock value (e.g., "01" or "10") associated with the DAC into the semaphore register. The value may be, for example, the bus master number assigned to DAC *y*. When the lock attempt is received, the semaphores module determines whether or not the semaphore currently is unlocked, in block 406. This may involve determining whether the appropriate idle state value (e.g., "00") currently is stored in the semaphore register, indicating that the semaphore is in the idle state, and thus unlocked.

When a determination is made that the semaphore is not currently unlocked, the semaphores module may deny the lock attempt, in block 408, by refusing to store the lock value provided by DAC *y* into the semaphore register. When DAC *y* subsequently reads the semaphore register, DAC *y* may compare the read value with the lock value that DAC *y* attempted to write, and determine that the lock attempt was unsuccessful. In an embodiment, DAC *y* may then enter a "spin-wait" loop, in which DAC *y* repeatedly attempts to write its lock value into the semaphore register until, ultimately, DAC *y* is successful in its write attempt. In an alternate embodiment, after having received a failed lock attempt from DAC *y,* the semaphores module may provide an unlock indication (e.g., an interrupt notification) to DAC *y* once the semaphore has been unlocked.

Referring again to block 406, when a determination is made that the semaphore currently is unlocked, the semaphores module writes the lock value into the semaphore register, thus performing a transition from the idle state to a state (e.g., state 304 or 306, FIG. 3) in which the semaphore is locked by DAC *y.* While in the DAC *y* lock state, the semaphores module provides semaphore state indicators to the MPU over the hardware connections (e.g., connections 130, 230-232, 650, 652, 750, FIGs 1, 2, 6, 7), where the semaphore state indicates that the semaphore is locked by DAC *y.* As will be described in more detail later, this causes the MPU to handle access requests by DAC *y* into the shared system resource associated with the semaphore according to the default access permissions for DAC *y*, and also causes the MPU to deny access requests into the shared system resource by DACs other than DAC *y*, despite their default access permissions. While in the DAC *y* lock state, the semaphores module will refuse to allow any other DAC to write a lock value into the semaphore register.

The semaphore remains in the DAC *y* lock state until a determination is made, in block 412, that an unlock attempt has been received. For example, an unlock attempt may be an attempt by a DAC (e.g., DAC *y* or some other DAC) to write an idle value (e.g., "00") into the semaphore register. When an unlock attempt has been received, the semaphores module determines whether the unlock attempt was made by DAC *y,* in block 414. If not, the unlock attempt is denied, in block 416, by refusing to store the idle value into the semaphore register.

When the semaphores module determines that the unlock attempt was made by DAC *y*, the semaphores module writes the idle value into the semaphore register, thus performing a transition from the DAC *y* lock state (e.g., state 304 or 306, FIG. 3) to the idle state (e.g., state 302, FIG. 3), in block 418. Again, while in the idle state, the semaphores module provides semaphore state indicators to the MPU over the hardware connections, where the semaphore state indicators indicate that the semaphore is unlocked. According to an embodiment, if a failed (denied) attempt had been made by another DAC to lock the semaphore while the semaphore was locked by DAC *y,* the semaphores module also may provide an unlock indication (e.g., an interrupt notification) to the DAC that had made the attempt. The method then iterates as shown.

Referring again to FIG. 2, in addition to semaphore registers 202-204 that implement the semaphore state machines, semaphores module 200 includes DAC determination comparators 210, write data comparators 212, combinational logic 214, 215, 216 associated with each semaphore register 202-204, multiplexer 220 (MUX), interrupt module 222, and an address decode module 224, in an embodiment. When a DAC (e.g., one of DACs 102-104, FIG. 1) attempts to write to one of semaphore registers 202-204, the DAC provides write data (e.g., an idle value or a lock value) and an address assigned to the semaphore register onto the system bus (e.g., bus 106, FIG. 1), and the write data and address are conveyed to the semaphores module 200 via the peripheral bus 226 (e.g., bus 126, FIG. 1). Address decode logic 224 is configured to analyze the address, and to determine whether the address corresponds to one of the semaphore registers 202-204. When the address does correspond to one of the semaphore registers 202-204, various analyses are performed to determine the validity and nature of the write attempt.

For example, in an embodiment, DAC determination comparators 210 are configured to determine whether the write attempt (or the peripheral bus cycle) was initiated by a valid DAC (i.e., a DAC that is allowed to affect semaphore state transitions). If not, the write attempt is ignored. In addition, write data comparators 212 are configured to determine whether the data that the DAC is attempting to write corresponds to a valid value (e.g., to an idle value (e.g., "00") or to a valid lock value (e.g., "01" for one DAC and "10" for another DAC)). Again, if it does not, the write attempt is ignored.

The outputs from the DAC determination comparators 210 and the write data comparators 212 are provided to combinational logic 214-216. Combinational logic 214-216 evaluates the comparator outputs in order to create appropriately-configured values for storage in the semaphore registers 202-204. As discussed in detail above, the values in the semaphore registers 202-204 indicate that the semaphore is unlocked, or is locked by one of the DACs. In addition, semaphore signals that represent state information (as indicated by the values stored within the semaphore registers 202-204) are provided over hardware connections 230-232 (e.g., hardware connections 130, 650, 652, 750, FIGs 1, 6, 7) to the MPU (e.g., MPU 110, FIG. 1). In an embodiment, the hardware connections 230-232 are configured to provide signals corresponding only to those bits that the MPU needs to perform its default access permission modifications, as will be discussed in more detail below. In other words, the entire value stored in a semaphore register 202-204 need not be provided to the MPU in the semaphore signals, as long as the bits are provided that indicate any DAC that has locked the corresponding semaphore.

MUX 220 provides a read path for the semaphore registers 202-204. More particularly, in response to a read request from a DAC (e.g., made to validate a write operation), MUX 220 may provide the value contained within a single semaphore register 202-204 to the peripheral bus 226, in an embodiment. In an alternate embodiment, MUX 220 may provide a value that represents a concatenation of a plurality of the semaphore registers 202-204 to the peripheral bus 226. For example, in an embodiment in which each semaphore register 202-204 is a byte (i.e., 8 bits) wide, and the peripheral bus is a word (i.e., 32 bits) wide, MUX 220 may concatenate the values within four semaphore registers 202-204, and may provide the concatenated value to peripheral bus 226. In this manner, a DAC may read the states (i.e., the semaphore register values) of multiple semaphore registers 202-204 with a single read operation. Although, the states of multiple semaphore registers may be read in a single access, only a single semaphore register may be updated via a write operation at a time, in an embodiment.

Interrupt module 222 is configured to provide an interrupt notification (or unlock indication) to a DAC that may have made a failed attempt to lock a semaphore while the semaphore was locked by another DAC. According to an embodiment, interrupt notifications may be enabled or disabled for each DAC. When an interrupt notification is enabled for a DAC, the interrupt module 222 keeps track of failed lock attempts for that DAC, monitors the values within the semaphore registers 202-204, and provides an interrupt to the DAC when a semaphore, which the DAC had failed to lock, becomes unlocked (i.e., transitions to the idle state).

As discussed previously, the MPU (e.g., MPU 110, FIG. 1) receives signals from the semaphores module (e.g., semaphores module 108, FIG. 1), which indicate whether or not a DAC has locked a semaphore associated with the shared system resource. Based on the semaphore signals, the MPU potentially may modify the default access permissions codified in the region descriptor for the shared system resource, in order to ensure that only a DAC that has properly locked a semaphore may be granted an access request to the shared system resource.

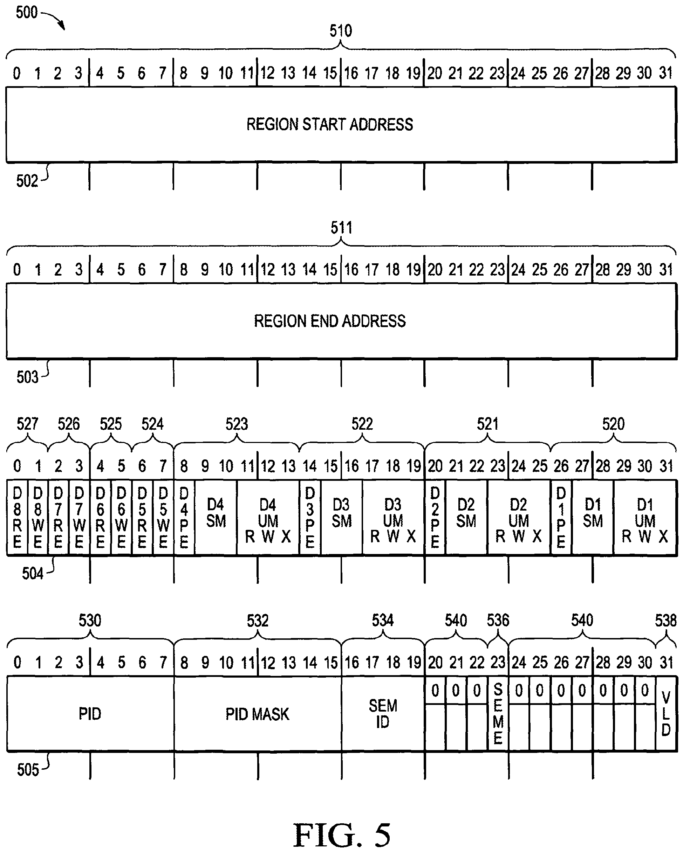

FIG. 5 is an example format of a region descriptor 500, in accordance with an example embodiment. Although region descriptor 500 is shown as having a particular format and arrangement, and is designed to specify access permissions for eight DACs, it is to be understood that a region descriptor may have a significantly different format from that shown in FIG. 5. For example, some of the region descriptor fields may have different lengths and/or may be located in different words and/or different locations within a word. In addition, although region descriptor 500 is designated to specify access permissions for eight DACs, it is to be understood that a region descriptor may specify access permissions for more or fewer than eight DACs.

In the example embodiment of FIG. 5, region descriptor 500 comprises four, 32-bit words 502, 503, 504, 505. The first word 502 includes a field 510 for a starting address of a region of a shared system resource. More particularly, field 510 may define the most significant bits of a 0-modulo-32 byte start address of a shared system resource. Similarly, the second word 503 includes a field 511 for an ending address of a region of a shared system resource. More particularly, field 511 may define the most significant bits of a 0-modulo-32 byte end address of a shared system resource. Together, the start and end addresses define the range of addresses that are encompassed by the shared system resource.

Region descriptor 500 also includes a third word 504, which includes default access permission fields 520, 521, 522, 523, 524, 525, 526, 527. Each of the default access permission fields 520-527 may include default access permissions for a single DAC (e.g., one of DACs 102-104, FIG. 1). Some default access permission fields (e.g., fields 524-527) may simply include read (R) and write (W) permission fields, which are indicated in FIG. 5 as having the formats "DyRE" (for DAC *y* read enable) and "DyWE" (for DAC *y* write enable). Read permission refers to the ability to access a referenced memory address using an operand (data) fetch. Write permission refers to the ability to update a referenced memory address using a store (data) instruction. Default access permission fields 524-527 are well suited for defining read and write permissions for non-processor type DACs (e.g., data movement engines and other modules). According to an embodiment, when a DyRE bit is set in region descriptor 500, the MPU (e.g., MPU 110, FIG. 1) would permit the corresponding DAC (i.e., *DAC y*) to perform read operations, unless such permission is altered based on the state of the corresponding semaphore, as will be discussed in more detail in conjunction with FIG. 6. When the DyRE bit is cleared, any attempted read by the corresponding DAC terminates (e.g., with an access error), and the read is not performed. Similarly, when a DyWE bit is set in region descriptor 500, the MPU would permit the corresponding DAC (i.e., DAC *y*) to perform write operations, unless such permission is altered based on the state of the corresponding semaphore, as will also be discussed in more detail in conjunction with FIG. 6. When the DyWE bit is cleared, any attempted write by the corresponding DAC terminates (e.g., with an access error), and the write is not performed.

In contrast with default access permission fields 524-527, default access permission fields (e.g., fields 520-523) may be configured for processor type DACs (e.g., processor cores), and accordingly also may include execute (X) permission fields. Execute permission refers to the ability to read a referenced memory address using an instruction fetch. Processor type DACs may be operated in user mode (UM) and supervisor mode (SM), and accordingly the default access permissions for those DACs may include different UM and SM permissions, as illustrated in FIG. 5. "User mode" refers to an operational mode of a processor that is prohibited from executing certain system control functions and input/output operations, and "supervisor mode" refers to an operational mode of a processor that can execute certain system control functions and input/output operations. Other differences between user mode and supervisor mode also may exist. In an embodiment, in user mode, there is a one-to-one correspondence between an access permission bit and an access type (e.g., there is one bit designated for each of the read, write, and execute enables). Conversely, in supervisor mode, the permissions may be encoded in two bits. For example, a value of "00" may correspond to allowing read, write, and execute, a value of "01" may correspond to allowing read and execute, but disallowing write, a value of "10" may correspond to allowing read and write, but disallowing execute, and a value of "1 1" may correspond to a state in which the access controls are the same as that defined for the DAC in user mode.

In addition to the above, in an embodiment, a process identifier enable field (PE) may be included in the processor type access permission fields (520-523). When the DyPE bit is set, a process identifier and mask defined in corresponding fields of the region descriptor (e.g., in fields 530, 532 of a fourth word 505 of region descriptor 500) are included in a region hit evaluation. When cleared, the region hit evaluation does not factor in the process identifier or mask.

The fourth word 505 of region descriptor 500 includes a process identifier (PID) field 530, a PID mask field 532, a semaphore identifier (SEM ID) field 534, a semaphore enable (SEME) field 536, and a region descriptor valid (VLD) field 538. In addition, the fourth word 505 may include one or more reserved (or unassigned) bits or fields 540.

PID field 530 may be used to contain a process identifier, which may be included in a determination of whether a current access hits in the region descriptor (e.g., when a DyPE bit is set in a PE field (e.g., in the third word 504). This field is combined with the PID mask in PID mask field 532. The PID mask field 532 provides a masking capability so that multiple process identifiers can be included as part of the region hit determination. For example, the assertion of PID mask bit "*i*" in PID mask field 532 means that the PID "*i"* bit in PID field 530 is ignored when comparing the PID/PIDmask combination versus the current PID value driven from the DAC. When enabled, the PID/PIDmask comparison versus the current PID is combined with the start and end address comparisons to determine the region descriptor "hit."

The semaphore identifier field 534 is used to store an indication of which semaphore (e.g., which of semaphore registers 202-204, FIG. 2) is associated with the region descriptor. For example, the semaphore identifier may correspond to the address offset associated with the semaphore registers, or with some other value that enables a unique indication of each of the semaphores. As will be explained in more detail below, the MPU (e.g., MPU 600, FIG. 6) includes an access evaluation circuit (e.g., access evaluation logic 610, 612, FIG. 6) that evaluates semaphore signals from the semaphore register indicated in the semaphore identifier field 534 during the process of making potential alterations to the default access permissions. SEME field 536 is used to enable the inclusion of a semaphore in a corresponding region descriptor's access evaluation logic. According to an embodiment, a "properly-enabled" semaphore is a semaphore for which, within a corresponding region descriptor, the SEME field 536 is asserted.

Because region descriptor 500 includes multiple words, and thus updating a region descriptor would involve multiple write operations (e.g., to update a region descriptor in a region descriptor register 602, 604, FIG. 6), the VLD field 538 is provided to ensure that coherency is maintained while updating the region descriptor. In an embodiment, VLD field 538 includes a flag which, when set, indicates that the entire region descriptor 500 includes coherent values. When the flag is cleared (e.g., either 1) by software directly clearing the VLD flag or 2) by the MPU hardware, which typically occurs if any of the first three words 502-504 are being written), the MPU will avoid reliance upon the region descriptor in making access permission determinations.

FIG. 6 is a simplified block diagram of an MPU 600 (e.g., MPU 110, FIG. 1), in accordance with an example embodiment. MPU 600 is configured to protect designated regions of shared system resources by evaluating access requests from DACs (e.g., DACs 102-104, FIG. 1), which may include addresses that fall within those designated regions. More particularly, for each protected region of shared system resources, MPU 600 may be configured to grant or deny access requests from DACs based on semaphore signals and a region descriptor corresponding to the region.

As discussed previously, a shared system resource may be defined with a region descriptor (e.g., region descriptor 500, FIG. 5), which also may include a designation of a semaphore associated with the region descriptor (e.g., in semaphore identifier field 534, FIG. 5) and a semaphore enable indication (e.g., in SEME field 536, FIG. 5). MPU 600 includes a plurality, R, of region descriptor registers 602, 604, where a region descriptor may be stored in each of the region descriptor registers 602, 604. MPU 600 also includes an access evaluation circuit (e.g., a plurality of access evaluation logic blocks 610, 612), address decode logic 630, and a multiplexer 632 (MUX), in an embodiment. According to a particular embodiment, MPU 600 includes sixteen each of region descriptor registers 602, 604 and access evaluation logic blocks 610, 612. However, it is to be understood that MPU 600 may include more or fewer region descriptor registers 602, 604 and access evaluation logic blocks 610, 612, in other embodiments.

According to an embodiment, each region descriptor register 602, 604 is comprised of four words, corresponding to the four-word format of the region descriptors (e.g., region descriptor 500, FIG. 5). In alternate embodiments, the region descriptor registers 602, 604 and region descriptors may have different formats (e.g., more or fewer words, and so on). Upon system startup or during normal operation, region descriptors associated with each region of shared system resources that MPU 600 is tasked to protect are written into region descriptor registers 602, 604. More particularly, a DAC tasked with configuring MPU 600 performs a series of write operations to the MPU 600, with the write addresses including offsets that identify the words (e.g., words 502-505, FIG. 5) of each region descriptor register 602, 604. The DAC conveys the write addresses (or address offsets) and the region descriptor words to the MPU 600 via system bus (e.g., system bus 106, FIG. 1) and peripheral bus 626 (e.g., peripheral bus 126, FIG. 1). Address decode logic 630 is configured to analyze the addresses, and to determine whether the addresses corresponds to the region descriptor registers 602, 604. When the addresses do correspond to the region descriptor registers 602, 604, the region descriptor words are written into the corresponding region descriptor register 602. According to an embodiment, region descriptors stored in region descriptor registers 602, 604 also may be read via multiplexer 632 and peripheral bus 626.

After the region descriptor registers 602, 604 have been written with region descriptors, DACs may attempt to access shared system resources. More particularly, when a DAC (e.g., one of DACs 102-104, FIG. 1) attempts to make an access to a shared system resource (e.g., an addressable location in RAM 112, a peripheral 120, 122, or flash 114, FIG. 1), the DAC provides an address for the shared system resource on the system bus 606 (e.g., bus 106, FIG. 1). The DAC also provides its unique bus master number on the system bus 606.

Access evaluation logic 610, 612 receives the address and bus master number from the system bus 606, and the region descriptors from region descriptor registers 602, 604. In addition, access evaluation logic 610, 612 receives semaphore signals from the semaphores module (e.g., semaphores module 108, 200, FIGs 1, 2) over hardware connections 650, 652 (e.g., connections 130, 230-232, 750, FIGs 1, 2, 7) between MPU 600 and the semaphores module.

When an access request is present on the system bus 606, access evaluation logic 610, 612 first makes a determination of whether or not the address associated with the access request falls within a region of a shared system resource that is protected by the MPU 600 (i.e., a region that is defined by at least one of the region descriptors in the region descriptor registers 602, 604). In conjunction with this determination, for each region descriptor, access evaluation logic 610, 612 receives a starting address and an ending address from the corresponding region descriptor register 602, 604, and access evaluation logic 610, 612 determines whether the address specified within the access request falls within the range of addresses spanned by the region descriptor (i.e., between the starting and ending addresses).

When the address associated with the access request does fall within the range of addresses spanned by a particular region descriptor stored within a particular region descriptor register 602, 604, access evaluation logic 610, 612 determines whether the DAC that has made the access request is permitted to perform the access into the protected, shared system resource. More particularly, based on the bus master number that the DAC provided on the system bus 606, access evaluation logic 610, 612 determines whether the DAC is permitted to perform an access of a requested access type (e.g., read, write, or execute) specified in the access request.

According to an embodiment, in conjunction with this determination, access evaluation logic 610, 612 produces "effective access permissions" based on the default access permissions specified in the corresponding region descriptor (i.e., stored in the corresponding region descriptor register 602, 604) and the semaphore signals (i.e., signals carried on hardware connections 650, 652) corresponding to a properly-enabled semaphore associated with the region in which the access request address falls (i.e., a semaphore and its associated enable, which are specified in the region descriptor of the corresponding region descriptor register 602, 604). Said another way, access evaluation logic 610, 612 is configured to analyze the received semaphore signals (i.e., signals carried on hardware connections 650, 652) from the semaphores module and the default access permissions from the region descriptor registers 602, 604, and to produce effective access permissions for the DACs by potentially altering the default access permissions based on the semaphore signals. In an embodiment, access evaluation logic 610, 612 includes effective access permissions generation logic 640, 642, which is configured to produce the effective access permissions.

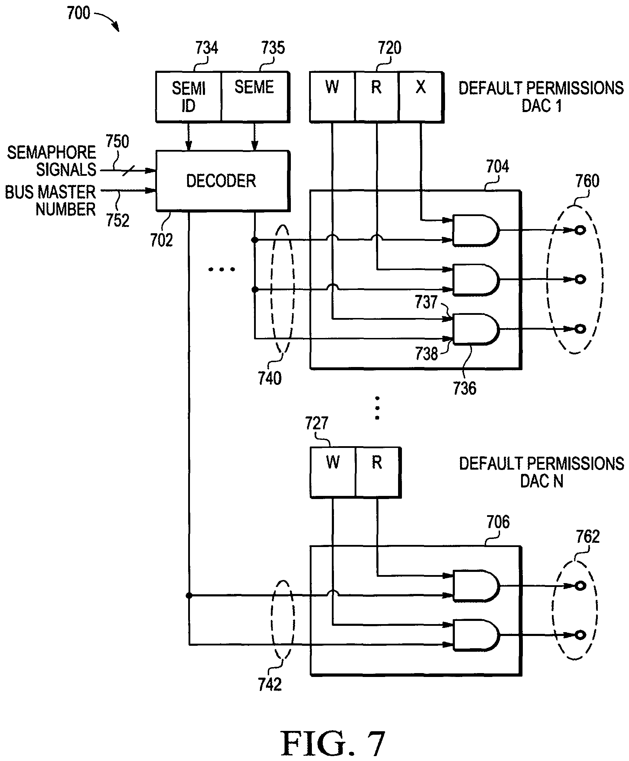

FIG. 7 is a simplified block diagram of effective access permissions generation logic 700 (e.g., effective access permissions generation logic 640, 642, FIG. 6), in accordance with an example embodiment. Effective permissions generation logic 700 is configured to potentially modify default access permissions 720, 727 codified in a region descriptor register based on semaphore signals, in order to produce effective access permissions 760, 762 that may be different from the default access permissions 720, 727. To accomplish this, effective access permissions generation logic 700 is coupled to a region descriptor register (e.g., region descriptor register 602, FIG. 6), to the hardware connections 750 between the semaphores module and the MPU (e.g., hardware connections 130, 230-232, 650, 652, FIGs 1, 2, 6), and to the system bus 752 (e.g., system bus 106, 606, FIGs 1, 6). Effective access permissions generation logic 700 includes a decoder 702 and an effective permissions logic block 704, 706 for each DAC whose default access permissions 720, 727 are codified in a region descriptor register, in an embodiment.

When the semaphore associated with effective access permissions generation logic 700 has not been enabled, as indicated by the SEME flag 735 (e.g., SEME 536, FIG. 5) in the associated region descriptor, effective access permissions generation logic 700 may be bypassed altogether, or effective access permissions generation logic 700 may simply output the default access permissions 720, 727 without alteration (e.g., despite the state of the semaphore). However, when the semaphore has been enabled, as indicated by the SEME flag 735, effective access permissions generation logic 700 may potentially alter the default access permissions 720, 727.

As implied previously, the semaphore signals conveyed by the semaphores module on the hardware connections 750 may include semaphore signals associated with multiple semaphores. However, only the semaphore signals from a semaphore associated with a particular region descriptor are relevant to the analyses performed by the effective access permissions generation logic 700 for that region descriptor. Accordingly, decoder 702 is configured to receive the semaphore identifier 734 (e.g., semaphore identifier 534, FIG. 5) from the region descriptor register to which it is coupled. When the SEME flag 735 (e.g., SEME flag 536, FIG. 5) indicates that the semaphore is enabled, decoder 702 selects the semaphore signals provided on hardware connections 750 that correspond to the identified semaphore.

Based on the selected semaphore signals and an identification of the DAC that is attempting the access (e.g., as indicated by the bus master number on system bus 752), decoder 702 is further configured to produce enable/disable signals on enable lines 740, 742, which signals are provided to the effective permissions logic blocks 704, 706. The effective permissions logic blocks 704, 706 are configured to produce the effective permissions 760, 762 based on the enable/disable signals and the default access permissions 720, 727. According to an embodiment, an effective permissions logic block 704, 706 is associated with the default access permission field (e.g., default access permission fields 520-527, FIG. 5) for each DAC whose permissions are codified in the region descriptor register. As discussed previously, some default access permission fields (e.g., fields 520-523, FIG. 5) may include read, write, and execute permission fields, while other default access permission fields (e.g., fields 524-527, FIG. 5) may simply include read and write permission fields. Effective permissions logic block 704 corresponds to a logic block configured to evaluate default access permission fields 720 that include read, write, and execute permissions, and effective permissions logic block 706 corresponds to a logic block configured to evaluate default access permission fields 727 that include only read and write permissions. It is to be understood that an effective permissions logic block may be configured to evaluate any possible combination of access permission types, and that the example of FIG. 7 is provided for purpose of explanation and not of limitation.

According to an embodiment, each effective permissions logic block 704, 706 includes logic configured to evaluate each type of default access permissions specified for a particular DAC. Based on the state of the enable/disable signals 740, 742 provided to the logic, the logic is configured either to produce an effective access permission that is the same as a corresponding default access permission (e.g., when the enable/disable signal is in an enable state), or to produce an effective access permission that indicates that the particular type of access is denied (e.g., when the enable/disable signal is in a disable state), despite the corresponding default access permission. Accordingly, even if the default access permissions for a particular DAC specify that a particular access type is permitted, the effective access permission for that access type will specify that the access type is denied for the DAC if the enable/disable signal is in a disable state.

In an embodiment, each effective permissions logic block 704, 706 includes logic (e.g., AND gate 736 or other logic capable of producing an equivalent result) for each access type specified in the default access permissions 720, 727 for a DAC. Each AND gate 736 has a default access permissions input (e.g., input 737) and an enable input (e.g., input 738). The default access permissions input 737 is coupled to receive a signal indicating a default access permission 720 of a particular access type from the region descriptor register. Conversely, the enable input 738 is coupled to receive an enable/disable signal 740, 742. The enable/disable signal 740, 742 is in an enable state when decoder 702 determines that the semaphore signals indicate that the DAC whose access permissions are being evaluated has locked the properly-enabled semaphore associated with the region descriptor. In that case, the AND gate 736 conveys the default access permission 720, 727 of the particular access type that is codified in the default access permissions 720, 727 as the effective access permission 760, 762 for that access type. Conversely, the enable/disable signal 740, 742 is in a disable state when decoder 702 determines that the semaphore signals do not indicate that the DAC whose access permissions are being evaluated has locked the properly-enabled semaphore associated with the region descriptor. In that case, the AND gate 736 does not convey the default access permission 720, 727 of the particular access type that is codified in the default access permissions 720, 727 as the effective access permission 760, 762 for that access type. Instead, the AND gate 736 conveys an effective access permission 760, 762 that indicates that that access type is denied for that DAC.

For example, when the semaphore signals selected by decoder 702 indicate that the properly-enabled semaphore is in an idle state (e.g., state 302, FIG. 3), none of the DACs currently have the semaphore locked. Because DACs are required to lock a semaphore before its assigned region of a shared system resource is accessed, any accesses to the region while the semaphore is idle should be denied. Accordingly, in an embodiment, when the selected semaphore signals indicate that the properly-enabled semaphore is in an idle state, decoder 702 produces disable signals on enable lines 740, 742 for all effective permissions logic blocks 704, 706. This has the effect of causing the effective permissions logic blocks 704, 706 to produce effective permissions 760, 762 that indicate that none of the DACs have appropriate access permissions to perform the requested access, despite the default access permissions 720, 727 that may be specified in the corresponding region descriptor register.

Conversely, when a DAC has locked the properly-enabled semaphore (i.e., the semaphore is in a locked state, such as one of states 304, 306, FIG. 3), the semaphore signals convey or indicate an identity of the DAC that has locked the semaphore. In such a case, the decoder 702 produces enable signals on whichever of enable lines 740, 742 correspond to the DAC identified in the semaphore signals, and produces disable signals on all other enable lines 740, 742. This has the effect of causing one of the effective permissions logic blocks 704, 706 (i.e., the block 704, 706 coupled to the default access permissions 720, 727 for the DAC that has locked the semaphore) to produce effective permissions 760, 762 for the DAC that are the same as the corresponding default access permissions 720, 727 for the DAC. In addition, this has the effect of causing all other ones of the effective permissions logic blocks 704, 706 to produce effective permissions 760, 762 that indicate that none of the other DACs (besides the one that has locked the semaphore) have access permissions to perform any requested access, despite the default access permissions 720, 727 that may be specified in the corresponding region descriptor register. In this manner, hardware enforcement of the memory region associated with the semaphore is provided by the MPU.

The configurations described herein are intended to avoid situations in which shared system resources are modified in a manner that they become non-coherent (e.g., when multiple DACs make non-serialized writes to a region of a shared system resource). Accordingly, in an embodiment, when a particular DAC has locked a semaphore, the effective access permissions of all other DACs are negated, denying access rights for all access types, as described above. Similarly, when a semaphore is in an idle state, the effective access permissions of all DACs are negated, for all access types. Of primary concern is non-coherent writes to a region of a shared system resource. In some cases, there may be a benefit (or at least little or no harm) in allowing a DAC that has not locked a semaphore to perform read type of accesses (and possibly execute-type of accesses) Accordingly, in an alternate embodiment, only some access types (e.g., write-type of accesses) may be negated by the effective permissions logic blocks 704, 706, whereas other access types are not negated (e.g., the effective permissions for these access types are produced to be the same as the corresponding default access types). Those of skill in the art would understand, based on the description herein, how to modify the described apparatus and method embodiments to contemplate that the system may potentially alter only certain access types specified in the default access permissions, in order to produce the effective access permissions.

As discussed previously, default access permissions may be provided with a one-to-one correspondence between each access type and an indicator of whether or not the access type is allowed or denied (e.g., an enable bit for each access type). Conversely, default access permissions may be encoded. In such a case, the effective permissions logic block corresponding to encoded default access permissions may include additional decoding circuitry (not shown) that is configured to decode encoded access permissions in order to convey a one-to-one correspondence between each access type and an indicator of whether or not the access type is allowed or denied (which indicator is provided to AND gates 736, for example).

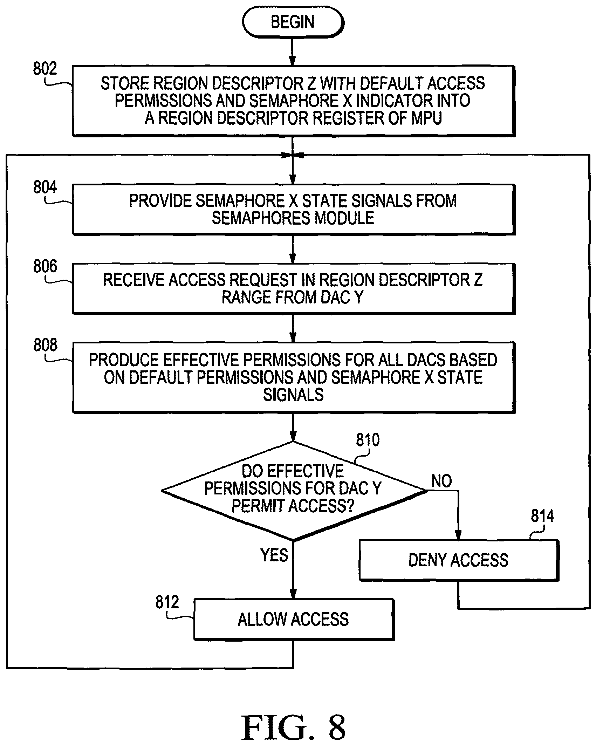

FIG. 8 is a flowchart of a method for granting or denying an access request to a shared system resource that is enforced by a properly-enabled semaphore and protected by an MPU, in accordance with an example embodiment. For purposes of simplicity, the method is described in the context of protecting a single region of a shared system resource that is defined by a single region descriptor (region descriptor *z,* below). In the example, the region descriptor specifies that a particular semaphore (semaphore *x,* below) is associated with the protected region (i.e., an identity of the semaphore is specified in the region descriptor), and that a particular DAC (DAC *y*, below) makes an access attempt into the region encompassed by the region descriptor. Those of skill in the art would understand, based on the description herein, that the method is expandable to contemplate systems, such as those described above, that enable multiple regions of shared system resources to be protected using multiple semaphores, where accesses may be requested by multiple DACs.

The method may begin, in block 802, by storing region descriptor z in a region descriptor register (e.g., one of registers 602, 604, FIG. 6) of the MPU (e.g., MPU 600, FIG. 6). This process may be performed, for example, in the context of system start up, reset, and/or normal system operation, and may involve performing a series of consecutive word-wide writes into the region descriptor register, as discussed previously. In accordance with this example, the region descriptor includes a semaphore identifier for semaphore *x* (e.g., in semaphore identifier field 534, FIG. 5), a semaphore enable field (e.g., SEME 536, FIG. 5), and default access permissions for a plurality of DACs, including default access permissions for DAC *y* (e.g., in default permissions fields 520-527, FIG. 5).

Once the system has been configured, in block 804, the semaphores module (e.g., semaphores module 108, FIG. 1) continually provides semaphore signals over hardware connections (e.g., hardware connections 130, FIG. 1) between the semaphores module and the MPU. The semaphore signals convey the states of each semaphore that is assigned to a region, including the state of semaphore *x,* which is assigned to the region defined by region descriptor *z.*

At an arbitrary time, in block 806, the MPU may receive an access request from DAC *y*, and the MPU may determine that the access request specifies an address that falls within the range of addresses encompassed by region descriptor *z.* The access request also specifies a particular access type (e.g., read, write, or execute).

In block 808, when a semaphore has been enabled for the range of addresses encompassed by region descriptor *z* (e.g., as indicated in SEME field 536, FIG. 5), the MPU produces effective access permissions for all DACs that have access permissions codified in region descriptor *z.* As discussed previously, this involves the MPU (more specifically decoder 702, FIG. 7) selecting the semaphore signals from the semaphores module that correspond to semaphore *x,* and providing enable/disable signals to MPU logic configured to produce the effective access permissions (e.g., effective permissions logic blocks 704, 706, FIG. 7). As discussed previously, when the semaphore signals indicate that semaphore *x* is in an idle state, all of the enable/disable signals are produced to be in a disable state, in an embodiment. Conversely, when the semaphore signals indicate that a DAC has locked semaphore *x,* the enable/disable signals for that DAC are produced to be in an enable state, while the enable/disable signals for all other DACs are produced to be in a disable state. Correspondingly, the effective access permissions for the DAC that has locked semaphore *x* will be the same as the default access permissions for that DAC, and the effective access permissions for all other DACs will indicate that all types of accesses should be denied. In alternate embodiments, as mentioned above, the effective access permissions for all other DACs may indicate that some types of accesses (e.g., read type) may be allowed to be the same as the corresponding default access permissions. When the semaphore has not been enabled, the effective access permissions are set to be equal to the default access permissions.

In block 810, a determination is made (e.g., by MPU 600) whether the access permissions for DAC *y* (i.e., the effective access permissions when the semaphore is enabled, or the default access permissions when the semaphore is not enabled) permit the access type specified in the access request from DAC *y.* If so, then the MPU allows the requested access to occur, in block 812. According to an embodiment, this includes the MPU providing a control signal to a controller associated with the shared system resource, indicating that the requested access is allowed. For example, a bus protocol may provide a control signal (or control vector) that is routed through the MPU, and that defines the validity of each cycle and each transfer. When the MPU determines that the access is allowed (i.e., the effective access permissions permit the requested access), the MPU may provide the control signal to the controller of the shared system resource. Conversely, when the MPU determines (in block 810) that the effective access permissions for DAC *y* do not permit the access type specified in the access request from DAC *y*, the MPU may deny (or inhibit) the access, in block 814. According to an embodiment, this includes the MPU providing a control signal to the controller associated with the shared system resource, indicating that the requested access is denied. For example, when the above bus protocol is implemented, the MPU may inhibit the normal transmission of the control signal to the controller of the shared system resource (e.g., the MPU may instead pass an "idle" control signal to the controller). After the requested access has been evaluated and either allowed or denied, the method may then iterate as shown.

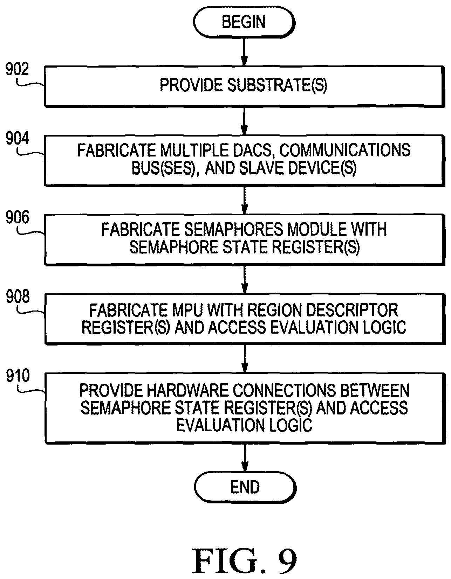

FIG. 9 is a flowchart of a method for fabricating an electronic system (e.g., system 100, FIG. 1) that includes a semaphore affected memory protection unit, in accordance with an example embodiment. The described method is intended to further illuminate actual hardware differences between a system in accordance with an embodiment, and prior systems. Accordingly, although the method involves various semiconductor manufacturing processes relating to the fabrication of active and passive components on one or more semiconductor substrates, the details regarding these semiconductor manufacturing processes are not described herein. Those of skill in the art would know, based on the description herein, how to apply conventional semiconductor manufacturing processes to perform the various method steps, which are described below. In addition, although a particular sequence of manufacturing steps is described and depicted in FIG. 9, it is to be understood that the order of steps may be different, and/or that some of the steps may be performed concurrently.

The method begins, in block 902, by providing one or more semiconductor substrates. In a system-on-a-chip, in which all of the system components (e.g., the DACs 102-104, system bus 106, semaphores module 108, MPU 110, RAM 112, flash array 114, peripheral modules 120, 122, and peripheral busses 124, 126, FIG. 1) are included on a same substrate, a single semiconductor substrate may be provided. Conversely, in a system-in-package or a system in which the system components are separately packaged, multiple semiconductor substrates may be provided.

In blocks 904, 906, and 908, multiple DACs (e.g., DACs 102-104), communications busses (e.g., busses 106, 124, 126), one or more slave devices (e.g., RAM 112, flash array 114, peripheral modules 120, 122), a semaphores module (e.g., semaphores module 108, 200, FIGs 1, 2), and an MPU (e.g., MPU 110, 600, FIGs 1, 6) are fabricated on the substrate(s) using conventional semiconductor processing techniques. As described in detail previously, the semaphores module includes semaphore state registers (e.g., semaphore state registers 202-204, FIG. 2), and the MPU includes region descriptor registers (e.g., region descriptor registers 602, 604, FIG. 6) and access evaluation logic (e.g., access evaluation logic 610, 612, FIG. 6).

In block 910, hardware connections (e.g., hardware connections 130, 230-232, 650, 652, 750, FIGs 1, 2, 6, 7) are provided between the semaphore state register(s) in the semaphores module and the access evaluation logic in the MPU. In a system-on-a-chip, the hardware connections may be restricted to the single substrate upon which the system is fabricated. In a system-in-package in which the semaphores module and the MPU are fabricated on different substrates, the hardware connections include conductors extending between the substrates, as well as conductors on the semaphores module and MPU substrates. In a system in which the semaphores module and the MPU are included in separately packaged devices, the hardware connections include conductors from the semaphores module to package interconnects (e.g., pins, lands, balls, bumps, and so on) of the semaphores module package, and conductors from the MPU to package interconnects of the MPU package. A printed circuit board upon which the separately packaged semaphores module and MPU are installed includes additional conductors between the corresponding package interconnects to establish the hardware connections between the semaphores module and the MPU. As discussed in detail above, the hardware connections enable the states of the semaphores to be conveyed to the MPU directly, without software intervention, thus enabling the MPU to generate effective access permissions based on the semaphore states. After further processing steps, the method may end.

Thus, various embodiments of methods and apparatus for controlling access to shared system resources have been described. An embodiment of an electronic system includes multiple DACs, a semaphores module, and an MPU. Each of the multiple DACs is configured to issue access requests, which request access to a shared system resource. A region descriptor is associated with the shared system resource. The semaphores module is configured to implement a semaphore for the shared system resource, and to produce semaphore signals indicating which one, if any, of the multiple DACs has locked the semaphore for the shared system resource. The MPU is configured to grant or deny the access requests based on the semaphore signals and the region descriptor.

An embodiment of an MPU includes a region descriptor register and access evaluation logic. The region descriptor register is for storing a region descriptor. The region descriptor specifies, for a shared system resource, an address range for the shared system resource and default access permissions for each of multiple data access components. The access evaluation logic is coupled to the region descriptor register. The access evaluation logic is configured to receive the default access permissions and semaphore signals, where the semaphore signals indicate which of multiple DACs, if any, has locked a semaphore associated with the shared system resource. The access evaluation logic is also configured to produce effective access permissions for the multiple DACs by potentially altering the default access permissions based on the semaphore signals, and to determine whether the multiple DACs are permitted to perform requested accesses based on the effective access permissions.

An embodiment of a method for providing access to a shared system resource in an electronic system that includes multiple DACs includes storing a region descriptor for the shared system resource in a region descriptor register. The region descriptor specifies default access permissions for each of the multiple DACs, and the region descriptor identifies a semaphore associated with the shared system resource. The method further includes receiving, through a hardware connection with a semaphores module, semaphore signals that indicate an identity of a DAC, if any, that has locked the semaphore associated with the shared system resource, and producing effective access permissions for the multiple DACs based on the default access permissions and the semaphore signals. When the semaphore signals indicate that a particular DAC has locked the semaphore, the effective access permissions are produced to indicate that access to the shared system resource is denied to other DACs, even when the default access permissions for the other DACs specify that access should be allowed.

While the principles of various embodiments have been described above in connection with specific systems, apparatus, and methods, it is to be clearly understood that this description is made only by way of example and not as a limitation on the scope of the inventive subject matter. Further, the phraseology or terminology employed herein is for the purpose of description and not of limitation.

The foregoing description of specific embodiments reveals the general nature of the various embodiments sufficiently so that others can, by applying current knowledge, readily modify and/or adapt it for various applications without departing from the general concept.

## Claims

1. An electronic system (100) comprising:
multiple data access components (102, 103, 104), each configured to issue access requests, which request access to a shared system resource, wherein a region descriptor is associated with the shared system resource, and wherein the region descriptor specifies, for the shared system resource, default access permissions for each of the multiple data access components;
a semaphores module (108) configured to implement a semaphore for the shared system resource,
a memory protection unit (110) configured to receive the semaphore signals;
a system interconnect (106, 124, 126) through which the access requests are communicated from the multiple data access components to the memory protection unit; wherein the semaphores module (108) is configured to produce semaphore signals indicating a particular data access component of the multiple data access components (102, 104, 106) that has locked the semaphore for the shared system resource, where the semaphore signals are received on hardware connections between semaphores modules (108) and the memory protection unit (110);
wherein the memory protection unit includes effective access permissions logic that determines effective access permissions from the default access permissions and the semaphore signals, and the memory protection unit is further configured to grant or deny the access requests based on the effective access permissions; wherein the effective access permissions produced by the memory protection unit for a first data access component are different from the default access permissions for the first data component when the semaphore signals indicate that a second data access component has locked the semaphore for the shared system resource;
the memory protection unit also includes a decoder (702) configured to receive the semaphore signals from the semaphores module (108), to produce an enable signal when the semaphore signals indicate that the particular data access component has locked the semaphore, and to produce a disable signal when the semaphore signals do not indicate that the particular data access component has locked the semaphore signal, and
the effective access permissions logic includes
a first logic circuit that has a first default access permissions input and a first enable input, wherein the first default access permissions input is coupled to receive a signal indicating a default access permission for a write access type from a region descriptor register, and wherein the first enable input is coupled to the decoder to receive the enable signal and to receive the disable signal, and wherein the first logic circuit conveys a signal indicating the default access permission for the write access type when the enable signal is received, and the first logic circuit, conveys an effective access permission that indicates that access for the write access type is denied when the disable signal is received, and
a second logic circuit that has a second default access permissions input and a second enable input, wherein the second default access permissions input is coupled to receive a signal indicating a default access permission for a read access type from the region descriptor register, and wherein the second enable input is coupled to the decoder to receive the enable signal and to receive the disable signal, and wherein the second logic circuit conveys signal indicating the default access permission for the read access type when the enable signal is received , and the second logic circuit conveys an effective access permission that indicates that access for the read access type is denied when the disable signal is received; and
hardware connections (130, 230, 231, 232, 650, 652, 750) between the semaphores module and the memory protection unit, wherein the hardware connections are distinct from the system interconnect, and the semaphore signals are communicated between the semaphores module and the memory protection unit through the hardware connections.

2. The electronic system (100) of claim 1, wherein the semaphores module (108) implements the semaphore as a state machine (300) having a state indication stored in a semaphore register (202, 203, 204), wherein the state machine includes an unlocked state (302) and multiple locked states (304, 306), wherein each of the multiple locked states corresponds to one of the multiple data access components (102, 103, 104) having locked the semaphore, and wherein the semaphore signals reflect the state indication.

3. The electronic system (100) of claim 1, wherein the semaphores module (108) implements the semaphore by storing, in a semaphore register (202, 203, 204), an indication selected from a group consisting of an indication that the shared system resource is unlocked, and an indication of an identity of a data access component (102, 103, 104) that has locked the shared system resource.

4. The electronic system (100) of claim 3, wherein the memory protection unit (110) comprises:
at least one region descriptor register (602, 604) for storing the region descriptor, wherein the region descriptor also specifies an address range for the shared system resource; and
an access evaluation circuit (610, 612) for receiving the semaphore signals from the semaphores module and the default access permissions from the at least one region descriptor register (602, 604), and for producing the effective access permissions for the multiple data access components (102, 103, 104) by potentially altering the default access permissions based on the semaphore signals.

5. The electronic system (100) of claim 4 , wherein the access evaluation circuit (610, 612) is further configured to receive an address associated with an access request that was made by the particular data access component (102, 103, 104), wherein the access request specifies a requested access type, to receive a starting address and an ending address from the at least one region descriptor register (602, 604), wherein the starting address and the ending address define a range of addresses spanned by the shared system resource, to determine whether the address specified within the access request falls within the range of addresses, and to determine whether the particular data access component (102, 103, 104) is permitted to perform the requested access type based on the effective access permissions.

6. The electronic system (100) of any one of the preceding claims, wherein:
the system interconnect (106, 124, 126) is coupled with the multiple data access components (102, 103, 104), the semaphores module (108), the memory protection unit (110), and the shared system resource.

7. A method for providing access to a shared system resource in an electronic system (100) that includes multiple data access components (102, 103, 104), the method comprising:
storing (802) a region descriptor for the shared system resource in a region descriptor register (602, 604), wherein the region descriptor specifies default access permissions for each of the multiple data access components (102, 103, 104), and the region descriptor identifies a semaphore associated with the shared system resource;
receiving (804), through a hardware connection (130, 230, 231, 232, 650, 652, 750) with a semaphores module (108) that is distinct from the system interconnect, semaphore signals that indicate an identity of a second data access component (102, 103, 104), that has locked the semaphore associated with the shared system resource;
receiving (806), over a system interconnect (106, 124, 126), an access request from a first data access component of one of the multiple data access components (102, 103, 104), wherein the hardware connection is distinct from the system interconnect; and
receiving, by a first logic circuit, a signal indicating a default access permission for a write access type from a region descriptor register;
receiving, by a first logic circuit, an enable signal when the semaphore signals indicate that the second data access component has locked the semaphore;
conveying, by the first logic circuit, the default access permission for the write access type in response to receiving the enable signal;
receiving, by the first logic circuit, a disable signal when the semaphore signals do not indicate that the second data access component has locked the semaphore;
conveying by the first logic circuit, an effective access permission that indicates that access for the write access type is denied in response to receiving the disable signal;
receiving, by a second logic circuit, a signal indicating a default access permission for a read access type from the region descriptor register;
receiving, by the second logic circuit, the enable signal when the semaphore signals indicate that the second data access component has locked the semaphore;
producing, by the second logic circuit, the default access permission for the read access type in response to receiving the enable signal;
receiving, by the second logic circuit, the disable signal when the semaphore signals do not indicate that the second data access component has locked the semaphore; and
producing, by the second logic circuit, an effective access permission that indicates that access for the read access type is denied in response to receiving the disable signal.

8. The method of claim 7, wherein the region descriptor also includes an indication of whether or not the semaphore associated with the shared system resource is enabled, and wherein the step of producing the effective access permissions is not performed when the semaphore is not enabled.

9. The method of claim 7 or 8, further comprising:
storing (410, 418), in a semaphore register (202, 203, 204), an indication selected from a group consisting of an indication that the shared system resource is unlocked, and an indication of an identity of a lock-requesting data access component (102, 103, 104) that has locked the shared system resource; and
producing (410), as the semaphore signals, the indication of the identity of the lock-requesting data access component (102, 103, 104).

10. The method of claim 9, wherein the semaphore can be in an unlocked state (302) or one of multiple locked states (304, 306), wherein a locked state is associated with each of the multiple data access components (102, 103, 104), and wherein the method comprises:
initializing (402) the semaphore to the unlocked state by storing, in the semaphore register (202, 203, 204), the indication that the shared system resource is unlocked;
receiving (404) a write request from the lock-requesting data access component (102, 103, 104); and
transitioning (410) the semaphore to a locked state associated with the lock-requesting data access component (102, 103, 104), wherein transitioning to the locked state includes storing the indication of the identity of the lock-requesting data access component (102, 103, 104) in the semaphore register (202, 203, 204), and wherein the semaphore signals convey the indication that is stored in the semaphore register (202, 203, 204).

11. The method of claim 7,8 or 9 wherein producing (808) the effective access permissions comprises, for a data access component (102, 103, 104) of the multiple data access components (102, 103,104):
receiving (808) the default access permissions from the region descriptor register (602, 604) in which the region descriptor is stored, wherein the default access permissions indicate whether or not the data access component (102, 103, 104) should be allowed to perform one or more access types;
determining (808), based on the semaphore signals, whether the data access component (102, 103, 104) has locked the semaphore;
when the data access component (102, 103, 104) has locked the semaphore, producing (808) the effective access permissions for the data access component (102, 103, 104) as being identical with the default access permissions; and
when the data access component (102, 103, 104) has not locked the semaphore, producing (808) the effective access permissions for the data access component (102, 103, 104) to indicate that the one or more access types are not allowed for the data access component.

## Patentansprüche

1. Ein elektronisches System (100) aufweisend:
mehrere Daten Zugang Komponenten (102, 103, 104),
wobei jede konfiguriert ist zum Ausgeben von Zugangsanfragen, welche Anfragen Zugang zu einer gemeinsamen Systemressource,
wobei ein Region Deskriptor assoziiert ist mit der gemeinsamen Systemressource, und wobei der Region Deskriptor spezifiziert, für die gemeinsame Systemressource, Default Zugang Genehmigungen für jeden von den mehreren Daten Zugang Komponenten;
ein Semaphoren Modul (108), welches konfiguriert ist zum Implementieren eines Semaphors für die gemeinsame Systemressource,
eine Speicher Schutz Einheit (110), welche konfiguriert ist zum Empfangen des Semaphor Signals;
eine Systemverbindung (106, 124, 126), durch welche die Zugangsanfragen kommuniziert werden von den mehreren Daten Zugang Komponenten zu der Speicher Schutz Einheit;
wobei das Semaphoren Modul (108) konfiguriert ist zum Produzieren von Semaphor Signalen, welche anzeigen eine bestimmte Daten Zugang Komponente von den mehreren Daten Zugang Komponenten (102, 104, 106), die verriegelt hat den Semaphor für die gemeinsame Systemressource,
wo die Semaphor Signale empfangen werden auf Hardwareverbindungen zwischen den Semaphoren Modulen (108) und der Speicher Schutz Einheit (110);
wobei die Speicher Schutz Einheit umfasst effektive Zugang Genehmigungen Logik, welche bestimmt effektive Zugang Genehmigungen von den Default Zugang Genehmigungen, und die Semaphor Signale, und die Speicher Schutz Einheit ferner konfiguriert ist zum Erteilen oder Ablehnen der Zugangsanfragen basierend auf den effektiven Zugang Genehmigungen, wobei die effektiven Zugang Genehmigungen, welche produziert werden mittels der Speicher Schutz Einheit für eine erste Daten Zugang Komponente, verschieden sind von den Default Zugang Genehmigungen für die erste Daten Komponente, wenn die Semaphor Signale anzeigen, dass eine zweite Daten Zugang Komponente verriegelt hat den Semaphor für die gemeinsame Systemressource;
wobei die Speicher Schutz Einheit ebenfalls umfasst einen Dekodierer (702), welcher konfiguriert ist zum Empfangen der Semaphor Signale von dem Semaphoren Modul (108) zum Produzieren eines Freigabesignals, wenn die Semaphor Signale anzeigen, dass die bestimmte Daten Zugang Komponente verriegelt hat den Semaphor, und zum Produzieren eines Abschaltsignals, wenn die Semaphor Signale nicht anzeigen, dass die bestimmte Daten Zugang Komponente verriegelt hat das Semaphor Signal, und
wobei die effektive Zugang Genehmigungen Logik umfasst
einen ersten Logikschaltkreis, welcher hat einen ersten Default Zugang Genehmigungen Eingang und einen ersten Freigabeeingang,
wobei der erste Default Zugang Genehmigungen Eingang gekoppelt ist zum Empfangen eines Signals, welches anzeigt eine Default Zugang Genehmigung für einen Schreibe Zugang Typ von einem Region Deskriptor Register, und
wobei der erste Freigabeeingang gekoppelt ist zu dem Dekodierer zum Empfangen des Freigabesignals und zum Empfangen des Abschaltsignals, und
wobei der erste Logikschaltkreis übermittelt ein Signal, welches anzeigt die Default Zugang Genehmigung für den Schreibe Zugang Typ, wenn das Freigabesignal empfangen wird, und der erste Logikschaltkreis übermittelt eine effektive Zugang Genehmigung, welche anzeigt, dass Zugang für den Schreibe Zugang Typ abgelehnt wird, wenn das Abschaltsignal empfangen wird, und
einen zweiten Logikschaltkreis, welcher hat einen zweiten Default Zugang Genehmigungen Eingang und einen zweiten Freigabeeingang,
wobei der zweite Default Zugang Genehmigungen Eingang gekoppelt ist zum Empfangen eines Signals, welches anzeigt eine Default Zugang Genehmigung für einen Lese Zugang Typ von dem Region Deskriptor Register, und
wobei der zweite Freigabeeingang gekoppelt ist zu dem Detektor zum Empfangen des Freigabesignals und zum Empfangen des Abschaltsignals, und
wobei der zweite Logikschaltkreis übermittelt ein Signal, welches anzeigt die Default Zugang Genehmigung für den Lese Zugang Typ, wenn das Freigabesignal empfangen wird, und der zweite Logikschaltkreis übermittelt eine effektive Zugang Genehmigung, welche anzeigt, dass Zugang für den Lese Zugang Typ abgelehnt ist, wenn das Abschaltsignal empfangen wird; und
Hardwareverbindungen (130, 230, 231, 232, 650, 652, 750) zwischen dem Semaphoren Modul und der Speicher Schutz Einheit,
wobei die Hardwareverbindungen sich unterscheiden von der Systemverbindung und die Semaphor Signale kommuniziert werden zwischen dem Semaphoren Modul und der Speicher Schutz Einheit durch die Hardware Verbindungen.

2. Das elektronische System (100) gemäß Anspruch 1,
wobei das Semaphoren Modul (108) implementiert den Semaphor als eine Zustandsmaschine (300), welche eine Zustandsangabe hat, die gespeichert ist in einem Semaphor Register (202, 203, 204),
wobei die Zustandsmaschine umfasst einen entriegelten Zustand (302) und mehrere verriegelte Zustände (304, 306),
wobei jeder von den mehreren verriegelten Zuständen korrespondiert zu einem von den mehreren Daten Zugang Komponenten (102, 103, 104), welche den Semaphor verriegelt haben, und
wobei die Semaphor Signale die Zustandsangabe reflektieren.

3. Das elektronische System (100) gemäß Anspruch 1,
wobei das Semaphoren Modul (108) implementiert den Semaphor durch Speichern, in einem Semaphor Register (202, 203, 204), einer Angabe, welche selektiert ist von einer Gruppe bestehend aus einer Angabe, dass die gemeinsame Systemressource entriegelt ist, und einer Angabe von einer Kennzeichnung von einer Daten Zugang Komponente (102, 103, 104), welche verriegelt hat die gemeinsame Systemressource.

4. Das elektronische System (100) gemäß Anspruch 3,
wobei die Speicher Schutz Einheit (110) aufweist:
zumindest einen Region Deskriptor Register (602, 604) zum Speichern des Region Deskriptors,
wobei der Region Deskriptor ebenfalls spezifiziert eine Adressbereich für die gemeinsame Systemressource; und
einen Zugang Evaluation Schaltkreis (610, 612) zum Empfangen der Semaphor Signale von dem Semaphoren Modul und der Default Zugang Genehmigungen von dem zumindest einen Region Deskriptor Register (602, 604) und zum Produzieren der effektiven Zugang Genehmigungen für die mehreren Daten Zugang Komponenten (102, 103, 104) durch potenzielles Verändern der Default Zugang Genehmigungen basierend auf den Semaphor Signalen.

5. Das elektronische System (100) gemäß Anspruch 4,
wobei der Zugang Evaluation Schaltkreis (610, 612) ferner konfiguriert ist zum Empfangen einer Adresse, welche assoziiert ist mit einer Zugangsanfrage, die gemacht wurde durch die bestimmte Daten Zugang Komponente (102, 103, 104),
wobei die Zugangsanfrage spezifiziert einen angefragten Zugangstyp zum Empfangen einer Startadresse und einer Endadresse von dem zumindest einen Region Deskriptor Register (602, 604),
wobei die Startadresse und die Endadresse definieren einen Bereich von Adressen, welcher aufgespannt ist durch die gemeinsame Systemressource, zum Bestimmen, ob die Adresse, die spezifiziert ist innerhalb der Zugangsanfrage, fällt innerhalb des Bereiches von Adressen, und zum Bestimmen, ob die bestimmte Daten Zugang Komponente (102, 103, 104) zugelassen ist zum Ausführen des angefragten Zugangstyps basierend auf den effektiven Zugang Genehmigungen.

6. Das elektronische System (100) gemäß irgendeinem der vorherigen Ansprüche, wobei:
die Systemverbindung (106, 124, 126) gekoppelt ist mit den mehreren Daten Zugang Komponenten (102, 103, 104), dem Semaphoren Modul (108), der Speicher Schutz Einheit (110) und der gemeinsamen Systemressource.

7. Ein Verfahren zum Bereitstellen von Zugang zu einer gemeinsamen Systemressource in einem elektronischen System (100), welches umfasst mehrere Daten Zugang Komponenten (102, 103, 104), das Verfahren aufweisend:
Speichern (802) eines Region Deskriptors für die gemeinsame Systemressource in einem Region Deskriptor Register (602, 604),
wobei der Region Deskriptor spezifiziert Default Zugang Genehmigungen für jede von den mehreren Daten Zugang Komponenten (102, 103, 104) und der Region Deskriptor identifiziert einen Semaphor, welcher assoziiert ist mit der gemeinsamen Systemressource;
Empfangen (804), durch eine Hardwareverbindung (130, 230, 231, 232, 650, 652, 750) mit einem Semaphoren Modul (108), welches sich unterscheidet von der Systemverbindung, von Semaphor Signalen, die anzeigen eine Kennzeichnung von einer zweiten Daten Zugang Komponente (102, 103, 104), welche verriegelt hat den Semaphor, der assoziiert ist mit der gemeinsamen Systemressource;
Empfangen (806), über eine Systemverbindung (106, 124, 126), einer Zugangsanfrage von einer ersten Daten Zugang Komponente von einer von den mehreren Daten Zugang Komponenten (102, 103, 104), wobei die Hardwareverbindung sich unterscheidet von der Systemverbindung; und
Empfangen, mittels eines ersten Logikschaltkreises, eines Signals, welches anzeigt eine Default Zugang Genehmigung für einen Schreib Zugang Typ von einem Region Deskriptor Register;
Empfangen, mittels eines ersten Logikschaltkreises, eines Freigabesignals, wenn die Semaphor Signale anzeigen, dass die zweite Daten Zugang Komponente verriegelt hat den Semaphor;
Übermitteln, mittels des ersten Logikschaltkreises, der Default Zugang Genehmigung für den Schreib Zugang Typ als Antwort auf Empfangen des Freigabesignals;
Empfangen, mittels des ersten Logikschaltkreises, eines Abschaltsignals, wenn die Semaphor Signale nicht anzeigen, dass die zweite Daten Zugang Komponente verriegelt hat den Semaphor;
Übermitteln, mittels des ersten Logikschaltkreises, einer effektiven Zugang Genehmigung, welche anzeigt, dass Zugang für den Schreib Zugang Typ abgelehnt ist als Antwort auf Empfangen des Abschaltsignals;
Empfangen, mittels eines zweiten Logikschaltkreises, eines Signals, welches anzeigt eine Default Zugang Genehmigung für einen Lese Zugang Typ von dem Region Deskriptor Register;
Empfangen, mittels des zweiten Logikschaltkreises, des Freigabesignals, wenn die Semaphor Signale anzeigen, dass die zweite Daten Zugang Komponente verriegelt hat den Semaphor;
Produzieren, mittels des zweiten Logikschaltkreises, der Default Zugang Genehmigung für den Lese Zugang Typ als Antwort auf Empfangen des Freigabesignals;
Empfangen, mittels des zweiten Logikschaltkreises, des Abschaltsignals, wenn die Semaphor Signale nicht anzeigen, dass die zweite Daten Zugang Komponente verriegelt hat den Semaphor; und
Produzieren, mittels des zweiten Logikschaltkreises, einer effektiven Zugang Genehmigung, welche anzeigt, dass Zugang für den Lese Zugang Typ abgelehnt ist als Antwort auf Empfangen des Abschaltsignals.

8. Das Verfahren gemäß Anspruch 7,
wobei der Region Deskriptor ebenfalls umfasst eine Angabe von, ob oder ob nicht der Semaphor, welcher assoziiert ist mit der gemeinsamen Systemressource, freigeben ist, und wobei der Schritt des Produzierens der effektiven Zugang Genehmigungen nicht ausgeführt werden, wenn der Semaphor nicht freigegeben ist.

9. Das Verfahren gemäß Anspruch 7 oder 8, ferner aufweisend:
Speichern (410, 418), in einem Semaphor Register (202, 203, 204), einer Angabe, welche selektiert ist von einer Gruppe bestehend aus einer Angabe, dass die gemeinsame Systemressource entriegelt ist, und einer Angabe von einer Kennzeichnung von einer Verriegelung anfragenden Daten Zugang Komponente (102, 103, 104), welche verriegelt hat die gemeinsame Systemressource; und
Produzieren (410), als die Semaphor Signale, der Angabe von der Verriegelung anfragenden Daten Zugang Komponente (102, 103, 104).

10. Das Verfahren gemäß Anspruch 9,
wobei der Semaphor sein kann in einem entriegelten Zustand (302) oder einem von mehreren verriegelten Zuständen (304, 306),
wobei ein verriegelter Zustand assoziiert ist mit jedem von den mehreren Daten Zugang Komponenten (102, 103, 104), und
wobei das Verfahren aufweist:
Initialisieren (402) des Semaphors zu dem entriegelten Zustand durch Speichern, in dem Semaphor Register (202, 203, 204), der Angabe, dass die gemeinsame Systemressource entriegelt ist;
Empfangen (404) einer Schreib Anfrage von der Verriegelung anfragenden Daten Zugang Komponente (102, 103, 104); und
Übergehen (410) des Semaphors zu einem verriegelten Zustand, welcher assoziiert ist mit der Verriegelung anfragenden Daten Zugang Komponente (102, 103, 104),
wobei Übergehen zu dem verriegelten Zustand umfasst Speichern der Angabe von der Kennzeichnung von der Verriegelung anfragenden Daten Zugang Komponente (102, 103, 104) in dem Semaphor Register (202, 203, 204), und
wobei die Semaphor Signale übermitteln die Angabe, welche gespeichert ist in dem Semaphor Register (202, 203, 204).

11. Das Verfahren gemäß Anspruch 7, 8 oder 9,
wobei Produzieren (808) der effektiven Zugang Genehmigungen aufweist, für eine Daten Zugang Komponente (102, 103, 104) von den mehreren Daten Zugang Komponenten (102, 103, 104):
Empfangen (808) der Default Zugang Genehmigungen von dem Region Deskriptor Register (602, 604), in welchem der Region Deskriptor gespeichert ist,
wobei die Default Zugang Genehmigungen anzeigen, ob oder ob nicht die Daten Zugang Komponente (102, 103, 104) zugelassen sein sollte zum Ausführen von einem oder mehreren Zugang Typen;
Bestimmen (808), basierend auf den Semaphor Signalen, ob die Daten Zugang Komponente (102, 103, 104) verriegelt hat den Semaphor;
wenn die Daten Zugang Komponente (102, 103, 104) verriegelt hat den Semaphor, Produzieren (808) der effektiven Zugang Genehmigungen für die Daten Zugang Komponente (102, 103, 104) als identisch zu sein mit den Default Zugang Genehmigungen; und
wenn die Daten Zugang Komponente (102, 103, 104) nicht verriegelt hat den Semaphor, Produzieren (808) der effektiven Zugang Genehmigungen für die Daten Zugang Komponente (102, 103, 104) zum Anzeigen, dass der eine oder die mehreren Zugangstypen nicht zugelassen sind für die Daten Zugang Komponente.

## Revendications

1. Système électronique (100) comprenant :
de multiples composants d'accès aux données (102, 103, 104), chacun étant configuré pour émettre des demandes d'accès, lesquelles demandent l'accès à une ressource système partagée, un descripteur de région étant associé à la ressource système partagée, le descripteur de région spécifiant, pour la ressource système partagée, des permissions d'accès par défaut pour chacun des multiples composants d'accès aux données ;
un module de sémaphores (108) configuré pour mettre en oeuvre un sémaphore pour la ressource système partagée,
une unité de protection de mémoire (110) configurée pour recevoir les signaux de sémaphore ;
une interconnexion système (106, 124, 126) à travers laquelle les demandes d'accès sont communiquées depuis les multiples composants d'accès aux données à destination de l'unité de protection de mémoire ;
dans lequel le module de sémaphores (108) est configuré pour produire des signaux de sémaphore indiquant un composant d'accès aux données particulier faisant partie des multiples composants d'accès aux données (102, 104, 106) qui a verrouillé le sémaphore pour la ressource système partagée, les signaux de sémaphore étant reçus sur des connexions matérielles situées entre les modules de sémaphores (108) et l'unité de protection de mémoire (110) ;
l'unité de protection de mémoire contenant une logique de permissions d'accès effectives qui détermine des permissions d'accès effectives à partir des permissions d'accès par défaut et des signaux de sémaphore ; et l'unité de protection de mémoire étant également configurée pour accepter ou refuser les demandes d'accès en fonction des permissions d'accès effectives ; les permissions d'accès effectives produites par l'unité de protection de mémoire pour un premier composant d'accès aux données étant différentes des permissions d'accès par défaut pour le premier composant de données lorsque les signaux de sémaphore indiquent qu'un deuxième composant d'accès aux données a verrouillé le sémaphore pour la ressource système partagée ;
l'unité de protection de mémoire contenant aussi un décodeur (702) configuré pour recevoir les signaux de sémaphore en provenance du module de sémaphores (108), pour produire un signal d'activation lorsque les signaux de sémaphore indiquent que le composant d'accès aux données particulier a verrouillé le sémaphore, et pour produire un signal de désactivation lorsque les signaux de sémaphore n'indiquent pas que le composant d'accès aux données particulier a verrouillé le signal de sémaphore, et
la logique de permissions d'accès effectives contenant
un premier circuit logique qui possède une première entrée de permissions d'accès par défaut et une première entrée d'activation, la première entrée de permissions d'accès par défaut étant couplée pour recevoir un signal indiquant une permission d'accès par défaut pour un type d'accès en écriture en provenance d'un registre de descripteur de région, et la première entrée d'activation étant couplée au décodeur pour recevoir le signal d'activation et pour recevoir le signal de désactivation, et le premier circuit logique transportant un signal indiquant la permission d'accès par défaut pour le type d'accès en écriture lorsque le signal d'activation est reçu, et le premier circuit logique transportant une permission d'accès effective qui indique que l'accès pour le type d'accès en écriture est refusé lorsque le signal de désactivation est reçu, et
un deuxième circuit logique qui possède une deuxième entrée de permissions d'accès par défaut et une deuxième entrée d'activation, la deuxième entrée de permissions d'accès par défaut étant couplée pour recevoir un signal indiquant une permission d'accès par défaut pour un type d'accès en lecture en provenance du registre de descripteur de région, et la deuxième entrée d'activation étant couplée au décodeur pour recevoir le signal d'activation et pour recevoir le signal de désactivation, et le deuxième circuit logique transportant un signal indiquant la permission d'accès par défaut pour le type d'accès en lecture lorsque le signal d'activation est reçu, et le deuxième circuit logique transportant une permission d'accès effective qui indique que l'accès pour le type d'accès en lecture est refusé lorsque le signal de désactivation est reçu ; et
des connexions matérielles (130, 230, 231, 232, 650, 652, 750) situées entre le module de sémaphores et l'unité de protection de mémoire, les connexions matérielles étant distinctes de l'interconnexion système, et les signaux de sémaphore étant communiqués entre le module de sémaphores et l'unité de protection de mémoire à travers les connexions matérielles.

2. Système électronique (100) selon la revendication 1, dans lequel le module de sémaphores (108) met en oeuvre le sémaphore en tant que machine d'état (300) ayant une indication d'état stockée dans un registre de sémaphore (202, 203, 204), la machine d'état contenant un état déverrouillé (302) et de multiples états verrouillés (304, 306), chacun des multiples états verrouillés correspondant à un des multiples composants d'accès aux données (102, 103, 104) ayant verrouillé le sémaphore, et les signaux de sémaphore reflétant l'indication d'état.

3. Système électronique (100) selon la revendication 1, dans lequel le module de sémaphores (108) met en oeuvre le sémaphore en stockant, dans un registre de sémaphore (202, 203, 204), une indication choisie dans un groupe constitué d'une indication signalant que la ressource système partagée est déverrouillée, et d'une indication d'une identité d'un composant d'accès aux données (102, 103, 104) qui a verrouillé la ressource système partagée.

4. Système électronique (100) selon la revendication 3, dans lequel l'unité de protection de mémoire (110) comprend :
au moins un registre de descripteur de région (602, 604) servant à stocker le descripteur de région, le descripteur de région spécifiant également une plage d'adresses pour la ressource système partagée ; et
un circuit d'évaluation d'accès (610, 612) servant à recevoir les signaux de sémaphore provenant du module de sémaphores et les permissions d'accès par défaut provenant dudit au moins un registre de descripteur de région (602, 604), et à produire les permissions d'accès effectives pour les multiples composants d'accès aux données (102, 103, 104) en altérant potentiellement les permissions d'accès par défaut en fonction des signaux de sémaphore.

5. Système électronique (100) selon la revendication 4, dans lequel le circuit d'évaluation d'accès (610, 612) est également configuré pour recevoir une adresse associée à une demande d'accès qui a été faite par le composant d'accès aux données particulier (102, 103, 104), la demande d'accès spécifiant un type d'accès demandé, pour recevoir une adresse de début et une adresse de fin en provenance dudit au moins un registre de descripteur de région (602, 604), l'adresse de début et l'adresse de fin définissant une plage d'adresses déployée par la ressource système partagée, pour déterminer si l'adresse spécifiée dans la demande d'accès se trouve dans la plage d'adresses, et pour déterminer si le composant d'accès aux données particulier (102, 103, 104) est autorisé à effectuer le type d'accès demandé en fonction des permissions d'accès effectives.

6. Système électronique (100) selon l'une quelconque des revendications précédentes, dans lequel :
l'interconnexion système (106, 124, 126) est couplée aux multiples composants d'accès aux données (102, 103, 104), au module de sémaphores (108), à l'unité de protection de mémoire (110) et à la ressource système partagée.

7. Procédé pour fournir l'accès à une ressource système partagée dans un système électronique (100) qui contient de multiples composants d'accès aux données (102, 103, 104), le procédé comprenant les étapes consistant à :
stocker (802) un descripteur de région pour la ressource système partagée dans un registre de descripteur de région (602, 604), le descripteur de région spécifiant des permissions d'accès par défaut pour chacun des multiples composants d'accès aux données (102, 103, 104), et le descripteur de région identifiant un sémaphore associé à la ressource système partagée ;
recevoir (804), par une connexion matérielle (130, 230, 231, 232, 650, 652, 750) avec un module de sémaphores (108) qui est distincte de l'interconnexion système, des signaux de sémaphore qui indiquent une identité d'un deuxième composant d'accès aux données (102, 103, 104), qui a verrouillé le sémaphore associé à la ressource système partagée ;
recevoir (806), sur une interconnexion système (106, 124, 126), une demande d'accès en provenance d'un premier composant d'accès aux données faisant partie des multiples composants d'accès aux données (102, 103, 146), la connexion matérielle étant distincte de l'interconnexion système ; et
recevoir, par un premier circuit logique, un signal indiquant une permission d'accès par défaut pour un type d'accès en écriture provenant d'un registre de descripteur de région ;
recevoir, par un premier circuit logique, un signal d'activation lorsque les signaux de sémaphore indiquent que le deuxième composant d'accès aux données a verrouillé le sémaphore ;
transporter, par le premier circuit logique, la permission d'accès par défaut pour le type d'accès en écriture en réponse à la réception du signal d'activation ;
recevoir, par le premier circuit logique, un signal de désactivation lorsque les signaux de sémaphore n'indiquent pas que le deuxième composant d'accès aux données a verrouillé le sémaphore ;
transporter, par le premier circuit logique, une permission d'accès effective qui indique que l'accès pour le type d'accès en écriture est refusé en réponse à la réception du signal de désactivation ;
recevoir, par un deuxième circuit logique, un signal indiquant une permission d'accès par défaut pour un type d'accès en lecture provenant du registre de descripteur de région ;
recevoir, par le deuxième circuit logique, le signal d'activation lorsque les signaux de sémaphore indiquent que le deuxième composant d'accès aux données a verrouillé le sémaphore ;
produire, par le deuxième circuit logique, la permission d'accès par défaut pour le type d'accès en lecture en réponse à la réception du signal d'activation ;
recevoir, par le deuxième circuit logique, le signal de désactivation lorsque les signaux de sémaphore n'indiquent pas que le deuxième composant d'accès aux données a verrouillé le sémaphore ; et
produire, par le deuxième circuit logique, une permission d'accès effective qui indique que l'accès pour le type d'accès en lecture est refusé en réponse à la réception du signal de désactivation.

8. Procédé selon la revendication 7, dans lequel le descripteur de région contient également une indication signalant si oui ou non le sémaphore associé à la ressource système partagée est activé, et dans lequel l'étape consistant à produire les permissions d'accès effectives n'est pas effectuée lorsque le sémaphore n'est pas activé.

9. Procédé selon la revendication 7 ou 8, comprenant également les étapes consistant à :
stocker (410, 418), dans un registre de sémaphore (202, 203, 204), une indication choisie dans un groupe constitué d'une indication signalant que la ressource système partagée est déverrouillée, et d'une indication d'une identité d'un composant d'accès aux données demandeur de verrouillage (102, 103, 104) qui a verrouillé la ressource système partagée ; et
produire (410), comme signaux de sémaphore, l'indication de l'identité du composant d'accès aux données demandeur de verrouillage (102, 103, 104).

10. Procédé selon la revendication 9, dans lequel le sémaphore peut être dans un état déverrouillé (302) ou un ou plusieurs états déverrouillés (304, 306), un état verrouillé étant associé à chacun des multiples composants d'accès aux données (102, 103, 104), le procédé comprenant les étapes consistant à :
initialiser (402) le sémaphore dans l'état déverrouillé en stockant, dans le registre de sémaphore (202, 203, 204), l'indication signalant que la ressource système partagée est déverrouillée ;
recevoir (404) une demande d'écriture en provenance du composant d'accès aux données demandeur de verrouillage (102, 103, 104) ; et
faire passer (410) le sémaphore dans un état verrouillé associé au composant d'accès aux données demandeur de verrouillage (102, 103, 104), le passage vers l'état verrouillé comprenant l'étape consistant à stocker l'indication de l'identité du composant d'accès aux données demandeur de verrouillage (102, 103, 104) dans le registre de sémaphore (202, 203, 204), les signaux de sémaphore transportant l'indication qui est stockée dans le registre de sémaphore (202, 203, 204).

11. Procédé selon la revendication 7, 8 ou 9, dans lequel l'étape consistant à produire (808) les permissions d'accès effectives comprend, pour un composant d'accès aux données (102, 103, 104) faisant partie des multiples composants d'accès aux données (102, 103, 104), les étapes consistant à :
recevoir (808) les permissions d'accès par défaut en provenance du registre de descripteur de région (602, 604) dans lequel le descripteur de région est stocké, les permissions d'accès par défaut indiquant s'il convient ou non que le composant d'accès aux données (102, 103, 104) soit autorisé à effectuer un ou plusieurs types d'accès ;
déterminer (808), d'après les signaux de sémaphore, si le composant d'accès aux données (102, 103, 104) a verrouillé le sémaphore ;
lorsque le composant d'accès aux données (102, 103, 104) a verrouillé le sémaphore, produire (808) les permissions d'accès effectives pour le composant d'accès aux données (102, 103, 104) de façon à ce qu'elles soient identiques aux permissions d'accès par défaut ; et
lorsque le composant d'accès aux données (102, 103, 104) n'a pas verrouillé le sémaphore, produire (808) les permissions d'accès effectives pour le composant d'accès aux données (102, 103, 104) pour indiquer que lesdits un ou plusieurs types d'accès ne sont pas autorisés pour le composant d'accès aux données.
